# EUROPÄISCHE PATENTSCHRIFT

(11) **EP 2 027 920 B1**
(45) Veröffentlichungstag und Bekanntmachung des Hinweises auf die Patenterteilung: **08.10.2014**
(21) Anmeldenummer: 08162075.9
(22) Anmeldetag: 08.08.2008
(51) Int. Cl.: B01J 31/22

(54) **Katalysatoren für Metathese-Reaktionen**
Catalysts for metathesis reactions
Catalyseurs pour les réactions de metathèses

(30) Priorität: 21.08.2007 DE 102007039527; 22.08.2007 DE 102007039695
(43) Veröffentlichungstag der Anmeldung: 25.02.2009
(73) Patentinhaber: LANXESS Deutschland GmbH, 50569 Köln (DE)
(72) Erfinder: Meca, Ludek, 73951 Dobra (CZ); Triscikova, Lubica, 8051, Zürich (CH); Berke, Heinz, 8268, Salenstein (CH); Langfeld, Kirsten, 03058, Neuhausen (DE); Schneider, Martin, 80804, München (DE); Nuyken, Oskar, 81927, München (DE); Obrecht, Werner, 47447, Moers (DE)

(56) Entgegenhaltungen:
- WO-A-97/06185
- WO-A-2004/112951
- PFEIFFER, JUERGEN ET AL: "Reactions of Complex Ligands. Part 79. Diarylcarbene Complexes of Chromium from Diazo Precursors: Synthesis and Reaction with Electron-Rich Alkynes" ORGANOMETALLICS , 17(20), 4353-4361 CODEN: ORGND7; ISSN: 0276-7333, 1998, XP002496808
- SCHNEIDER, SABINE K. ET AL: "Pyridin-, quinolin- and acridinylidene palladium carbene complexes as highly efficient C-C coupling catalysts" ADVANCED SYNTHESIS & CATALYSIS , 348(14), 1862-1873 CODEN: ASCAF7; ISSN: 1615-4150, 2006, XP002496809

## Beschreibung

Die vorliegende Erfindung betrifft Übergangsmetall-Carben-Komplexkatalysatoren, deren Herstellung sowie Verwendung für die Katalyse von Metathese-Reaktionen, insbesondere für die Metathese von Nitrilkautschuk.

Metathese-Reaktionen werden umfangreich im Rahmen chemischer Synthesen eingesetzt, z.B. in Form von Ringschlussmetathesen (RCM), Kreuzmetathesen (CM), Ringöffnungsmetathesen (ROM), ringöffnende Metathesepolymerisationen (ROMP), cyclische Dien Metathese-polymerisationen (ADMET), Selbstmetathese, Umsetzung von Alkenen mit Alkinen (enin-Reaktionen), Polymerisation von Alkinen und Olefinierung von Carbonylen (WO-A-97/06185 und Platinum Metals Rev., 2005, 49(3), 123-137). Anwendung finden Metathese-Reaktionen beispiels-weise zur Olefin-Synthese, zur ringöffnenden Polymerisation von Norbornenderivaten, zur Depolymerisation ungesättigter Polymere und zur Synthese von Telechelen.

Bei den bekannten Metall-Carbenkomplexen weist der Carbenrest unterschiedlichste Strukturen auf. Aus WO-A-96/04289 und WO-A-97/06185 sind beispielsweise Metathesekatalysatoren mit folgender prinzipieller Struktur bekannt: 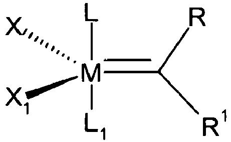 worin M für Osmium oder Ruthenium steht, R und R¹ organische Reste mit großer struktureller Variationsbreite darstellen, X und X₁ anionische Liganden und L sowie L₁ neutrale Elektronen-Donoren darstellen. Unter dem gängigen Begriff "anionische Liganden" werden in der Literatur für derartige Metathese-Katalysatoren immer solche Liganden verstanden, die, wenn man sie als vom Metall-Zentrum entfernt betrachtet, bei geschlossener Elektronenschale negativ geladen sind.

Ein spezieller Vertreter dieser Verbindungsklasse ist die als "Grubbs (I) Katalysator" bekannte Verbindung:

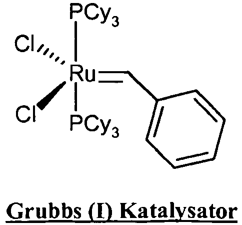

Aus WO-A-00/71554 ist ferner eine Gruppe von Katalysatoren bekannt, die in der Fachwelt als "**Grubbs (II) Katalysatoren**" bezeichnet werden.

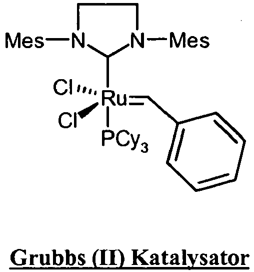

Aus US 2002/0107138 A1 sind weitere Metathese-Katalysatoren bekannt, zu denen der nachfolgend dargestellte gehört, der in der Literatur auch als "Hoveyda-Katalysator" bezeichnet wird.

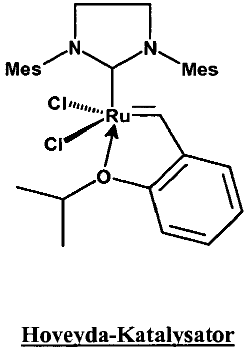

Aus WO-A-2004/035596 sind weitere Metathese-Katalysatoren bekannt, zu denen der nachfolgend dargestellte gehört, der in der Literatur auch als "Grela-Katalysator" bezeichnet wird.

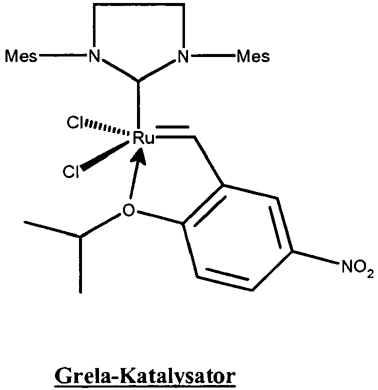

Aus der WO-A-03/011455 sind ferner hexakoordinierte Komplexkatalysatoren bekannt, die unter der Bezeichnung "Grubbs (III)-Katalysatoren" bekannt sind.

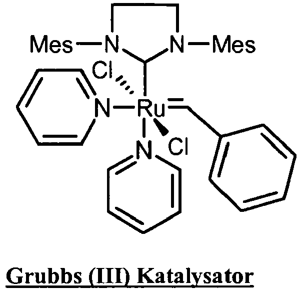

Des weiteren sind Katalysatoren bekannt, bei denen die beiden am Kohlenstoff-Atom des Carbenrests befindlichen Substituenten verbrückt sind.

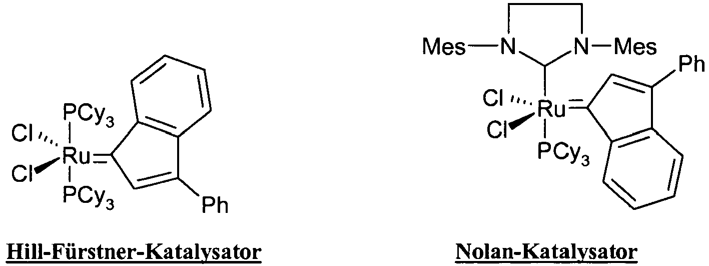

Nach Fürstner et al. (Chem. Eur. J. 2001, 7, No 22, 4811-4820) erfolgte die Herstellung des ersten Vertreters der zuvor genannten Verbindungsklasse durch Hill et al. (K.J. Harlow, A.F. Hill, J.D.E.T. Wilton-Ely, J. Chem. Soc. Dalton Trans. 1999, 285-291), wobei dem Reaktionsprodukt zunächst eine nicht zutreffende Struktur zugeordnet wurde. Die richtige Strukturzuordnung erfolgte durch Fürstner et al. (J. Org. Chem. 1999, 64, 8275-8280). Dieser Katalysator ist der oben als Hill-Fürstner Katalysator bezeichnete. Derivate diese Katalysators, die einen NHC Liganden anstelle des Phosphin-Liganden enthalten, wurden von Nolan in der WO-A-00/15339 beschrieben. Diese von Nolan beschriebenen Derivate eignen sich auch als Ausgangsprodukt für die Synthese weiterer Ruthenium-Carben-Verbindungen durch Kreuzmetathese (WO-A-2004/112951)

In US-A-2003/0100776 werden auf Seite 8, Absatz [0087] Katalysatoren beschrieben, die einen Carben-Liganden aufweisen, bei dem die Reste R¹ und R² verbrückt sind, wobei die sich ergebende cyclische Gruppe aliphatisch oder aromatisch sein kann und Substituenten oder Heteroatome enthalten kann. Es wird ausgeführt, dass diese cyclische Gruppe typischerweise 4 bis 12, bevorzugt 5 bis 8 Ringatome aufweist. Explizite Beispiele werden für derartige cyclische Gruppen nicht beschrieben oder nahe gelegt.
Andere Katalysatoren, bei denen die beiden am Kohlenstoff-Atom des Carbenrestes befindlichen Substituenten verbrückt sind, sind derzeit nicht bekannt.

In WO-A-97/06185 wird auf Seite 7, Zeilen 39 - 40 von Grubbs ein nicht erfolgreicher Versuch zur Umsetzung von RuCl₂(=CHR)(PPh₃)₂ mit 9-Diazafluoren bei Raumtemperatur beschrieben. Er stellt fest, dass die Reaktion bei Raumtemperatur nicht erfolgreich ist. Zur Zugabedauer des 9-Diazofluoren zur Lösung des Rutheniumvorläufers wurden keine Angaben gemacht.

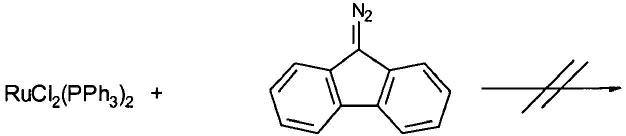

Aufgrund der Vielzahl von Einsatzmöglichkeiten besteht weiterhin ein hoher Bedarf an neuen Katalysatoren für Metathese-Reaktionen.

Überraschenderweise wurde im Rahmen der vorliegenden Erfindung gefunden, dass durch Einhaltung spezieller Reaktionsparameter die Synthese neuer Übergangsmetall-Komplexkatalysatoren gelingt, die einen Fluorenylliganden aufweisen und als Katalysatoren für Metathese-Reaktionen eingesetzt werden können.

### Gegenstand der Erfindung sind Katalysatoren mit einem Strukturelement der allgemeinen Formel (IIa)

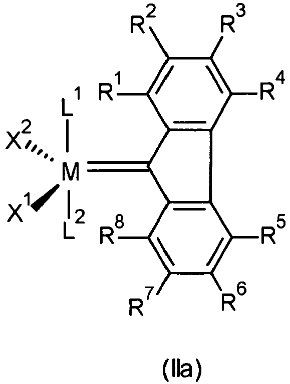

worin
- M: Ruthenium oder Osmium ist,
- X¹ und X²: gleich oder verschieden sind und zwei Liganden, bevorzugt anionische Liganden, darstellen,
- L¹ und L²: gleiche oder verschiedene Liganden, bevorzugt neutrale Elektronen-Donoren darstellen, wobei L² alternativ auch mit dem Rest R⁸ verbrückt sein kann, und
- R¹-R⁸: gleich oder verschieden sind und für Wasserstoff, Halogen, Hydroxyl, Aldehyd, Keto, Thiol, CF₃, Nitro, Nitroso, Cyano, Thiocyano, Isocyanato, Carbodiimid, Carbamat, Thiocarbamat, Dithiocarbamat, Amino, Amido, Imino, Silyl, Sulfonat (-SO₃⁻), -OSO₃⁻, -PO₃⁻ oder OPO₃⁻ bedeuten oder für Alkyl-, Cycloalkyl-, Alkenyl-, Alkinyl-, Aryl-, Carboxylat-, Alkoxy-, Alkenyloxy-, Alkinyloxy-, Aryloxy-, Alkoxycarbonyl-, Alkylamino-, Alkylthio-, Arylthio-, Alkylsulfonyl-, Alkylsulfinyl, Dialkylamino-, Alkylsilyl oder Alkoxysilyl stehen, wobei diese Reste alle jeweils optional durch ein oder mehrere Alkyl-, Halogen-, Alkoxy-, Aryl- oder Heteroaryl-Reste substituiert sein können, oder alternativ jeweils zwei direkt benachbarte Reste aus der Gruppe von R¹-R⁸ unter Einschluss der Ringkohlenstoff-Atome, an die sie gebunden sind, durch Verbrückung eine cyclische Gruppe, bevorzugt ein aromatisches System, ausbilden, oder alternativ R⁸ gegebenenfalls mit einem anderen Liganden des Ruthenium- oder Osmium-Carben-Komplexkatalysators verbrückt ist.

Im Rahmen dieser Anmeldung und Erfindung können alle zuvor genannten und im Folgenden genannten, allgemeinen oder in Vorzugsbereichen genannten Definitionen von Resten, Parametern oder Erläuterungen untereinander, also auch zwischen den jeweiligen Bereichen und Vorzugsbereichen in beliebiger Weise kombiniert werden.

Der im Rahmen dieser Anmeldung im Zusammenhang mit den verschiedenen Typen von Metathese-Katalysatoren verwendete Begriff "substituiert" bedeutet, dass ein Wasserstoff-Atom an einem angegebenen Rest oder Atom durch eine der jeweils angegebenen Gruppen ersetzt ist, mit der Maßgabe, dass die Wertigkeit des angegebenen Atoms nicht überschritten wird und die Substitution zu einer stabilen Verbindung führt.

Typischerweise sind die erfindungsgemäßen Ruthenium- oder Osmium Carben-Katalysatoren fünffach koordiniert.

### In der allgemeinen Formel (IIa) sind

- R¹-R⁸: gleich oder verschieden und bedeuten Wasserstoff, Halogen, Hydroxyl, Aldehyd, Keto, Thiol, CF₃, Nitro, Nitroso, Cyano, Thiocyano, Isocyanato, Carbodiimid, Carbamat, Thiocarbamat, Dithiocarbamat, Amino, Amido, Imino, Silyl, Sulfonat (-SO₃⁻), -OSO₃⁻, -PO₃⁻ oder OPO₃⁻ oder stehen für Alkyl, bevorzugt C₁-C₂₀-Alkyl, insbesondere C₁-C₆-Alkyl, Cycloalkyl, bevorzugt C₃-C₂₀-Cycloalkyl, insbesondere C₃-C₈-Cycloalkyl, Alkenyl, bevorzugt C₂-C₂₀-Alkenyl, Alkinyl, bevorzugt C₂-C₂₀-Alkinyl, Aryl, bevorzugt C₆-C₂₄-Aryl, inbesondere Phenyl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkinyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulfonyl, Alkylsulfinyl, bevorzugt C₁-C₂₀-Alkylsulfinyl, Dialkylamino-, bevorzugt Di(C₁-C₂₀-alkyl)amino, Alkylsilyl, bevorzugt C₁-C₂₀-Alkylsilyl, oder Alkoxysilyl, bevorzugt C₁-C₂₀-Alkoxysilyl-Reste darstellen, wobei diese Reste alle jeweils optional durch ein oder mehrere Alkyl-, Halogen-, Alkoxy-, Aryl- oder Heteroaryl-Reste substituiert sein können, oder alternativ auch jeweils zwei direkt benachbarte Reste aus der Gruppe von R¹-R⁸ unter Einschluss der Ringkohlenstoff-Atome, an die sie gebunden sind, durch Verbrückung eine cyclische Gruppe, bevorzugt ein aromatisches System, ausbilden können, oder alternativ R⁸ gegebenenfalls mit einem anderen Liganden des Ruthenium- oder Osmium-Carben-Komplexkatalysators verbrückt ist.

**C₁-C₆-Alkyl** steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**C₃-C₈-Cycloalkyl** umfasst Cyclopropyl, Cyclobutyl, Cylopentyl, Cyclohexyl, Cycloheptyl und Cyclooctyl.

**C₆-C₂₄-Aryl** umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

### X¹ und X²

In der allgemeinen Formel (IIa) können **X¹ und X²** beispielsweise Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl-Reste bedeuten.

Die vorgenannten Reste X¹ und X² können ferner durch ein oder mehrere weitere Reste substituiert sein, beispielsweise durch Halogen, bevorzugt Fluor, C₁-C₁₀-Alkyl, C₁-C₁₀-Alkoxy oder C₆-C₂₄-Aryl, wobei auch diese Reste gegebenenfalls wiederum durch ein oder mehrere Substituenten substituiert sein können, die aus der Gruppe umfassend Halogen, bevorzugt Fluor, C₁-C₅-Alkyl, C₁-C₅-Alkoxy und Phenyl ausgewählt sind.

In einer bevorzugten Ausführungsform sind X¹ und X² gleich oder verschieden und bedeuten Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat.

In einer besonders bevorzugten Ausführungsform sind X¹ und X² identisch und bedeuten Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat).

### Liganden L¹ und L²

In der allgemeinen Formel (IIa) stehen L¹ und L² für gleiche oder verschiedene Liganden, bevorzugt neutrale Elektronen-Donoren.

Die beiden Liganden L¹ und L² können beispielsweise unabhängig voneinander einen Phosphin-, sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Thioether-, einen Imidazolidin ("Im")-Liganden oder einen stickstoffhaltigen Liganden ausgewählt aus der Gruppe bestehend aus Pyridin, einem Picolin (α-, β-, und γ-Picolin), Lutidin (2,3-, 2,4-, 2,5-, 2,6-, 3,4- und 3,5-Lutidin), Collidin (2,4,6-Trimethylpyridin), Trifluormethylpyridin, Phenylpyridin, 4-(Dimethylamino)pyridin, Chlorpyridin, (2-, 3- und 4-Chlorpyridin), Brompyridin (2-, 3- und 4-Brompyridin), Nitropyridin (2-, 3- und 4-Nitropyridin), Chinolin, Pyrimidin, Pyrrol, imidazol und Phenylimidazol bedeuten.

Bevorzugt bedeuten die beiden Liganden L¹ und L² unabhängig voneinander einen Phosphin-Liganden der Formel P(L³)₃ wobei L³ gleich oder verschieden sind und Alkyl-, bevorzugt C₁-C₁₀-Alkyl-, besonders bevorzugt C₁-C₅-Alkyl-, Cycloalkyl-, bevorzugt C₃-C₂₀-Cycloalkyl-, besonders bevorzugt C₃-C₈-Cycloalkyl, insbesondere bevorzugt Cyclopentyl, Cyclohexyl und Neopentyl, Aryl, bevorzugt C₆-C₂₄-Aryl-, besonders bevorzugt Phenyl oder Tolyl, einen sulfonierten Phosphin-Liganden der Formel P(L⁴)₃, wobei L⁴ einen ein- oder mehrfach sulfonierten Ligand L³ darstellt, einen C₆-C₂₄-Aryl- oder C₁-C₁₀-Alkyl-Phosphinit-Liganden, einen C₆-C₂₄-Aryl- oder C₁-C₁₀-Alkylphosphonit-Liganden, einen C₆-C₂₄-Aryl- oder C₁-C₁₀-Alkylphosphit-Liganden, einen C₆-C₂₄-Aryl- oder C₁-C₁₀-Alkylarsin-Liganden, einen C₆-C₂₄-Aryl- oder C₁-C₁₀-Alkylamin-Liganden, einen Pyridin-Liganden, einen C₆-C₂₄-Aryl- oder C₁-C₁₀-Alkyl-Sulfoxid-Liganden, einen C₆-C₂₄-Aryl- oder C₁-C₁₀-Alkyl-Ether-Liganden oder einen C₆-C₂₄-Aryl- oder C₁-C₁₀-Alkylamid-Liganden, die alle jeweils ein oder mehrfach substituiert sein können, beispielsweise durch eine Phenylgrupppe, wobei auch diese Substituenten wiederum gegebenenfalls durch einen oder mehrere Halogen-, C₁-C₅ Alkyl- oder C₁-C₅ Alkoxy-Reste substituiert sind.

Die Bezeichnung **"Phosphin"** schließt beispielsweise PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Propyl)₃, P(CHCH₃(CH₂CH₃))₃, P(Cyclopentyl)₃, P(Cyclohexyl)₃, P(Neopentyl)₃ und P(Neophenyl)₃ ein.

Die Bezeichnung **"Phosphinit"** schließt beispielsweise Triphenylphosphinit, Tricyclohexylphosphinit, Triisopropylphosphinit und Methyldiphenylphosphinit ein.

Die Bezeichnung **"Phosphit"** schließt beispielsweise Triphenylphosphit, Tricyclohexylphosphit, Tri-tert.-Butylphosphit, Triisopropylphosphit und Methyldiphenylphosphit ein.

Die Bezeichnung **"Stibin"** schließt beispielsweise Triphenylstibin, Tricyclohexylstibin und Trimethylstiben ein.

Die Bezeichnung **"Sulfonat"** schließt beispielsweise Trifluoromethansulfonat, Tosylat und Mesylat ein.

Die Bezeichnung **"Sulfoxid"** schließt beispielsweise CH₃S(=O)CH₃ und (C₆H₅)₂SO ein.

Die Bezeichnung **"Thioether"** schließt beispielsweise CH₃SCH₃, C₆H₅SCH₃, CH₃OCH₂CH₂SCH₃ und Tetrahydrothiophen ein.

Der Imidazolidinrest (Im) weist üblicherweise eine Struktur der allgemeinen Formeln (XIa) oder (XIb) auf, 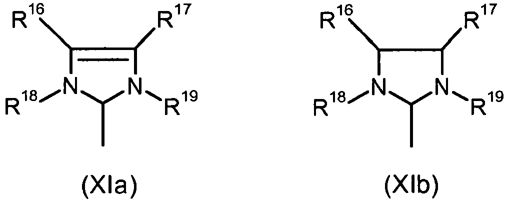 worin
- R¹⁶, R¹⁷, R¹⁸, R¹⁹: gleich oder verschieden sind und Wasserstoff, geradkettiges oder verzweigtes C₁-C₃₀-Alkyl, C₃-C₂₀-cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten.

Gegebenenfalls kann einer oder mehrere der Reste R¹⁶, R¹⁷, R¹⁸, R¹⁹ unabhängig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein, wobei diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

Nur zur Klarstellung sei hinzugefügt, dass die in den allgemeinen Formeln (XIa) und (XIb) dargestellten Strukturen des Imidazolidinrests mit den in der Literatur für diesen Imidazolidinrest (Im) häufig auch zu findenden Strukturen (XIa') und (XIb'), die den Carben-Charakter des Imidazolidinrests hervorheben, gleichbedeutend sind. Dies gilt entsprechend auch für die zugehörigen bevorzugten, nachfolgend noch dargestellten Strukturen (XIIa)-(XIIf).

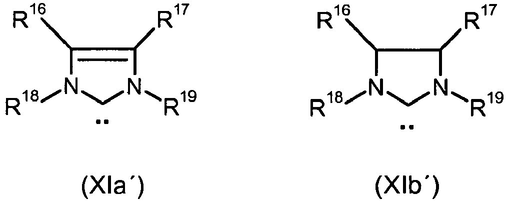

In einer bevorzugten Ausführungsform der Katalysatoren der allgemeinen Formel (IIa) bedeuten R¹⁶ und R¹⁷ unabhängig voneinander Wasserstoff, C₆-C₂₄-Aryl, besonders bevorzugt Phenyl, geradkettiges oder verzweigtes C₁-C₁₀-Alkyl, besonders bevorzugt Propyl oder Butyl, oder bilden zusammen unter Einschluss der Kohlenstoffatome, an die sie gebunden sind, einen Cycloalkyl- oder Aryl-Rest, wobei alle vorgenannten Reste gegebenenfalls wiederum durch ein oder mehrere weitere Reste substituiert sein können, ausgewählt aus der Gruppe umfassend geradkettiges oder verzweigtes C₁-C₁₀-Alkyl, C₁-C₁₀-Alkoxy, C₆-C₂₄-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer besonders bevorzugten Ausführungsform weisen die Katalysatoren der allgemeinen Formel (IIa) einen oder zwei Imidazolidinreste (Im) als Liganden L¹ und L² auf, worin die Reste R¹⁸ und R¹⁹ gleich oder verschieden und bedeuten geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, C₆-C₁₀-Arylsulfonat, besonders bevorzugt p-Toluolsulfonat.

Gegebenenfalls sind die vorgenannten Reste als Bedeutungen von R¹⁸ und R¹⁹ substituiert durch einen oder mehrere weitere Reste ausgewählt aus der Gruppe umfassend geradkettiges oder verzweigtes C₁-C₅-Alkyl, insbesondere Methyl, C₁-C₅-Alkoxy, Aryl und eine funktionelle Grupppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste R¹⁸ und R¹⁹ gleich oder verschieden sein und bedeuten i-Propyl, Neopentyl, Adamantyl, Mesityl oder 2,6-Diisopropylphenyl.

Insbesondere bevorzugt Imidazolidinreste (Im) haben die nachfolgenden Strukturen (XIIa)-(XIIf), wobei Mes jeweils für einen 2,4,6-Trimethylphenyl-Rest steht oder alternativ in allen Fällen für einen 2,6-Diisopropylphenyl-Rest.

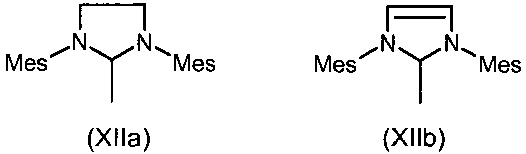

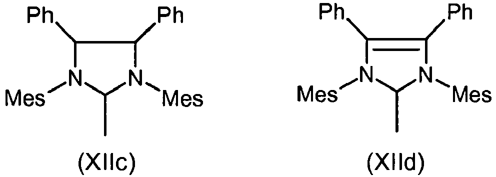

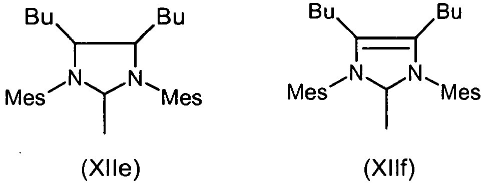

Ebenfalls bevorzugt stehen einer oder beide Liganden L¹ und L² in der allgemeinen Formel (IIa) für gleiche oder verschiedene Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt steht in der allgemeinen Formel (IIa) einer oder beide Liganden L¹ und L² für einen Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Bevorzugt sind Katalysatoren der allgemeinen Formeln (IIa), wobei
- M: Ruthenium darstellt,
- X¹ und X²: gleichzeitig Halogen bedeuten,
- L¹ und L²: die für die allgemeinen Formel (IIa) genannten allgemeinen oder bevorzugten Bedeutungen besitzt,
- R¹-R⁸: die für die allgemeinen Formel (IIa) genannten allgemeinen oder bevorzugten Bedeutungen besitzt,

Ganz besonders bevorzugt sind Katalysatoren der Formeln (IIa), wobei
- M: Ruthenium darstellt,
- X¹ und X²: beide Chlor bedeuten,
- L¹: einen Imidazolidin-Rest der Formeln (XIIa) bis (XIIf) darstellt,
- L²: einen sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-Rest, einen Imidazolidin-Rest der Formeln (XIIa) bis (XIIf) oder einen Phosphin-Liganden, insbesondere PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Propyl)₃, P(CHCH₃(CH₂CH₃))₃, P(Cyclopentyl)₃, P(Cyclohexyl)₃, P(Neopentyl)₃ und P(Neophenyl)₃ darstellt,
- R¹-R⁸: die für die allgemeinen Formel (IIa) genannten allgemeinen oder bevorzugten Bedeutungen besitzen.

Für den Fall, dass der Rest R⁸ mit einem anderen Liganden des erfindungsgemäßen Katalysators verbrückt ist, ergeben sich beispielsweise für die Katalysatoren der allgemeinen Formel (IIa) die folgenden Strukturen der allgemeinen Formel (XIIIa) 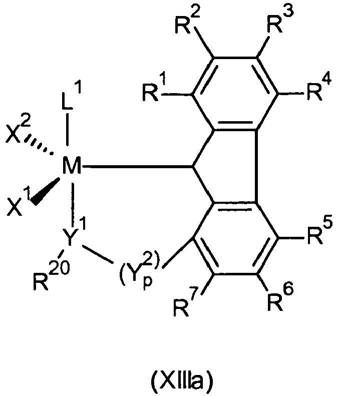 worin
- Y¹: Sauerstoff, Schwefel, einen Rest N-R²¹ oder einen Rest P-R²¹ bedeutet, wobei R²¹ die nachfolgend genannten Bedeutungen besitzt,
- R²⁰ und R²¹: gleich oder verschieden sind und einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellen, die alle jeweils optional durch ein oder mehrere Alkyl-, Halogen-, Alkoxy-, Aryl- oder Heteroaryl-Reste substituiert sein können,
- p: 0 oder 1 ist und
- Y²: wenn p = 1 ist, für -(CH₂)ᵣ- mit r = 1, 2 oder 3, -C(=O)-CH₂-, -C(=O)-, -N=CH-, -N(H)-C(=O)- oder aber alternativ die gesamte Struktureinheit "-Y¹ (R²⁰)- (Y²)ₚ-,, für (-N(R²⁰)=CH-CH₂-), (-N(R²⁰,R²¹)=CH-CH₂-), steht und
wobei M, X¹, X², L¹, R¹-R⁸, A, m und n die gleichen Bedeutungen besitzen wie in der allgemeinen Formel (IIa).

Als **Beispiele für die erfindungsgemäßen Katalysatoren** seien die folgenden **Strukturen** genannt:

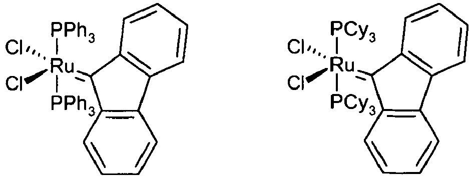

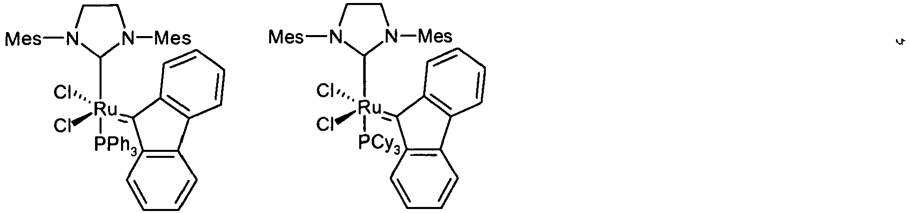

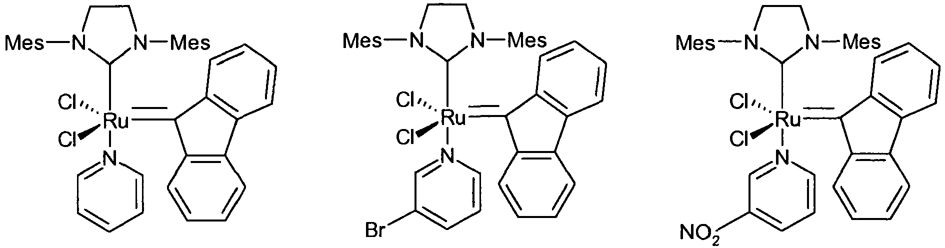

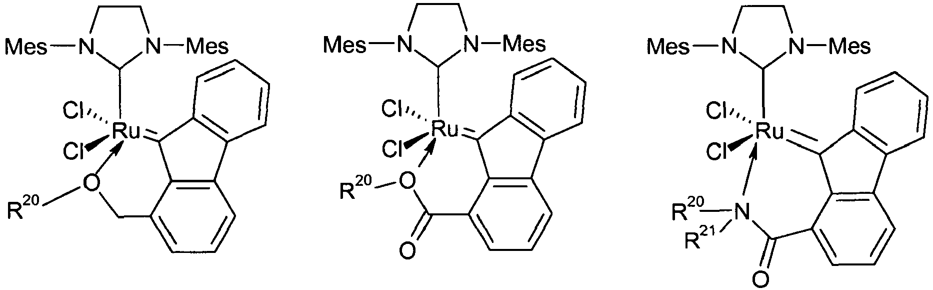

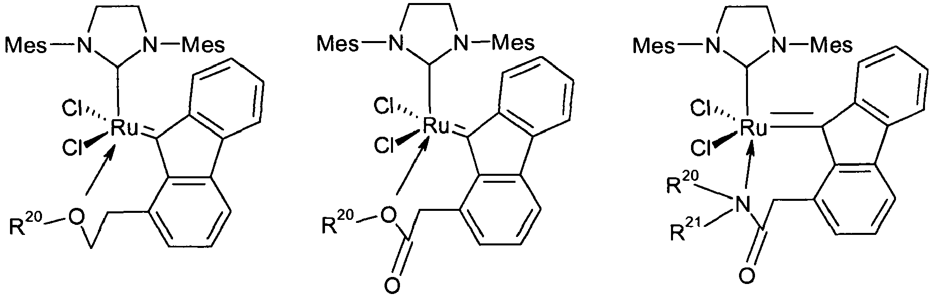

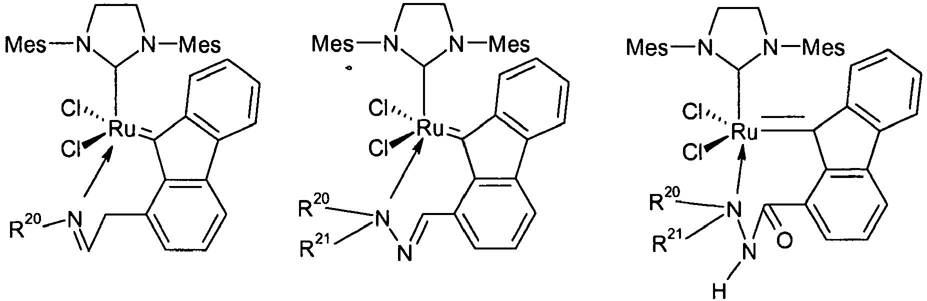

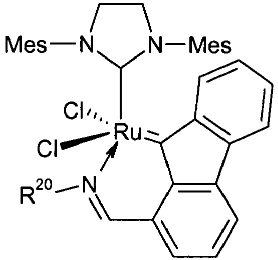

### Herstellung der erfindungsgemäßen Katalysatoren:

Die Synthese derartiger Ruthenium- oder Osmium-Carben-Komplexkatalysatoren kann durch Umsetzung geeigneter Katalysator-Vorläuferkomplexverbindungen mit geeigneten Diazoverbindungen erfolgen, wenn man diese Synthese in einem speziellen Temperaturbereich durchführt und gleichzeitig das Molverhältnis der Edukte zueinander in einem speziellen Bereich liegt.

**Gegenstand der Erfindung** ist somit ein **Verfahren zur Herstellung von**
**Katalysatoren der allgemeinen Formel (IIa)** wobei eine Katalysator-Vorläuferverbindung der allgemeinen Formel (XVII), 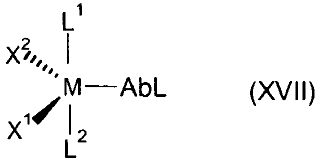 worin
- M, X¹, X², L¹ und L²: die gleichen allgemeinen und bevorzugten Bedeutungen wie in der allgemeinen Formel (IIa) besitzen und
- AbL: für "Abgangsligand" steht und die gleichen Bedeutungen annehmen kann wie L¹ und L² wie in der allgemeinen Formel (IIa), bevorzugt einen Phosphin-Ligand mit den für die allgemeine Formel (IIa) genannten Bedeutungen darstellt,
mit einer Verbindung der allgemeinen Formel (XVI) 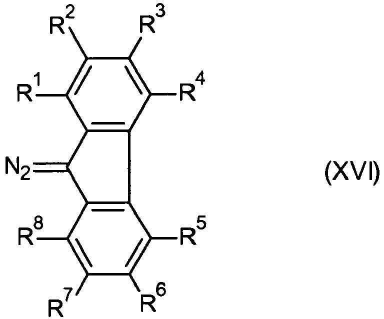 worin R¹-R⁸ die für die allgemeine Formel (IIa) genannten Bedeutungen besitzen, bei einer Temperatur im Bereich von +30 bis +50°C und bei einem Molverhältnis der Katalysator-Vorläuferverbindung der allgemeinen Formel (XVII) zur Verbindung der allgemeinen Formel (XVI) von 1:0,5 bis 1:5, vorzugsweise 1:1,5 bis 1:2,5 besonders bevorzugt 1:2 umgesetzt wird.

Exemplarisch ist nachfolgend die Herstellung eines Katalysators dargestellt, der unter die allgemeine Formel (II) fällt. Bei der Umsetzung erhält man den gewünschten Fluorenylidencarben-Komplexkatalysator in einer Mischung mit Fluorenylidentriphenylphosphazin.

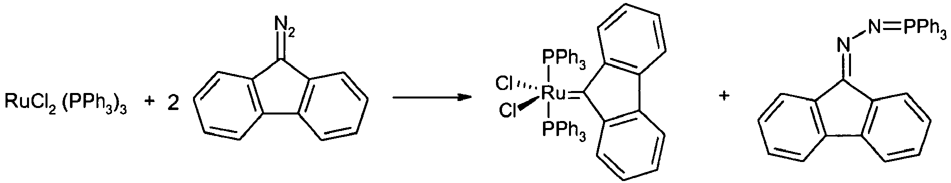

Der im obigen Schema dargestellte erfindungsgemäße Katalysator RuCl₂(fluorenyliden)(PPh₃)₂ zeichnet sich gegenüber bekannten des Standes der Technik dadurch aus, dass er wesentlich stabiler als RuCl₂(benzyliden)(PPh₃)₂ ist. RuCl₂(benzyliden)(PPh₃)₂ ist im festen Zustand stabil und zersetzt sich aber in Lösung bereits bei -60°C (J. Am. Chem. Soc. 1996, 118, 100). Zur Verbesserung der Stabilität in Lösung muss RuCl₂(benzyliden)(PPh₃)₂ mit PCy₃ zu RuCl₂(benzyliden)(PCy₃)₂ umgesetzt werden. Dies ist beim entsprechenden RuCl₂(fluorenyliden)(PPh₃)₂ nicht notwendig. Dies ist ein wirtschaftlicher Vorteil.

Zur Einführung von einem oder zwei Im-Liganden ("Im" wie zuvor in den Formeln (XIa) und (XIb) sowie (XIIIa-f) definiert) hat sich folgende Vorgehensweise bewährt:

Im **ersten Schritt** wird das zuvor beschriebene Verfahren zur Herstellung eines erfindungsgemäßen Katalysators durchgeführt, wobei die Liganden L¹ und L² alle für die allgemeine Formel (IIa) angegebenen Bedeutungen besitzen außer derjenigen des Im-Liganden. Im **zweiten Schritt** werden ausgehend von diesem erfindungsgemäßen Katalysator, der bereits das allgemeine Strukturelement (I) enthält, einer oder beide Liganden L¹ und L² durch einen Im-Liganden ersetzt.

Besonders bevorzugt ist diese Vorgehensweise für die Herstellung eines erfindungsgemäßen Katalysators der Formel RuCl₂("fluorenyliden")(PPh₃)(Im), wobei "fluorenyliden" stellvertretend für den Liganden im Komplexkatalysator steht, der das allgemeine Strukturelement (I) enthält: Zunächst wird ausgehend von RuCl₂(PPh₃)₃ durch Ligandenaustausch RuCl₂("fluorenyliden")(PPh₃)₂ hergestellt und im zweiten Schritt einer der beiden Triphenylphosphin-Liganden durch einen gesättigten oder ungesättigten Im-Liganden ersetzt.

Zur Einführung des oder der Im-Liganden kann man freie Carbene, wie diese nach der Methode von Arduengo **(**J.Am. Chem. Soc. 1995, 117, 11027**)** erhalten werden, einsetzen. Alternativ geht man von den Salzen der Carbene mit starken Säuren wie z.B. mit Salzsäure oder Tetrafluorborwasserstoffsäure bzw. von Carbenaddukten an Chloroform, t-Butanol, Chloral etc. aus. In den Fällen, in denen Carbensalze bzw. Carbenaddukte eingesetzt werden, wird das "freie" Carben durch starke Basen entsprechend US-A-6,613,910 in situ erzeugt.

Bevorzugt ist jedoch die Verwendung der freien Carbene, die nach dem von Arduengo in J.Am. Chem. Soc. 1995, 117, 11027 beschriebenen Verfahren hergestellt und isoliert werden. Dieses Verfahren nach Arduengo hat den Vorteil, dass auf diese Weise sowohl gesättigte als auch ungesättigte Carbene zugänglich sind, denn nach US-A-6,613,910 sind die Carbenaddukte ungesättigter Carbene nicht zugänglich "It is relevant to note that only 4,5-dihydroimidazolium salts form imidazolidenes- the aromatic imidazolium salts (i.e., the unsaturated analogs never form these adducts under any conditions" (Spalte 19, Zeile 65 bis Spalte 20, Zeile 1)

Der zweite Schritt der beschriebenen zweistufigen Vorgehensweise, in dem der Im-Ligand eingeführt wird, ist nachfolgend beispielhaft verdeutlicht:

Die Herstellung von Verbindungen der allgemeinen Formel (IIa), worin L¹ und/oder L² die Bedeutung eines Im-Liganden besitzt, erfolgt somit durch Umsetzung von Verbindungen der allgemeinen Formel (IIa') 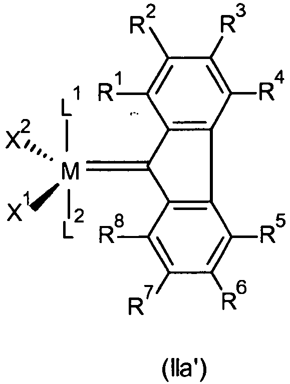
worin X¹, X² und R¹-R⁸ die gleichen Bedeutungen besitzen wie in der allgemeinen Formel (IIa),
L¹ und L² gleich oder verschieden sind und für einen Phosphin-Liganden, bevorzugt für PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Propyl)₃, P(CHCH₃(CH₂CH₃))₃, P(Cyclopentyl)₃, P(Cyclohexyl)₃, P(Neopentyl)₃ oder P(Neophenyl)₃ steht, und
mit einer Verbindung der allgemeinen Formel (XVIIIa) oder (XVIIIb) 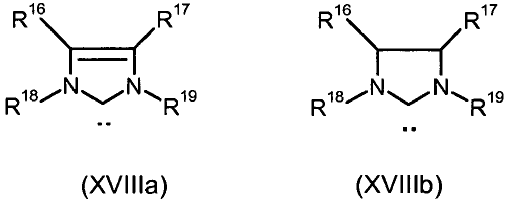 worin R¹⁶ bis R¹⁹ die für die allgemeinen Formeln (XIa) und (XIb) genannten Bedeutungen haben.

Bei dieser Umsetzung wird in der Formel (IIa') der Ligand L¹ und/oder der Ligand L² durch einen Ligand der Formel (XVIIIa) oder (XVIIIb) ausgetauscht.

Nachfolgend ist diese Umsetzung an einem besonders bevorzugten Beispiel dargestellt, worin ein P(Ph)₃ Ligand durch einen Im-Liganden ausgetauscht wird.

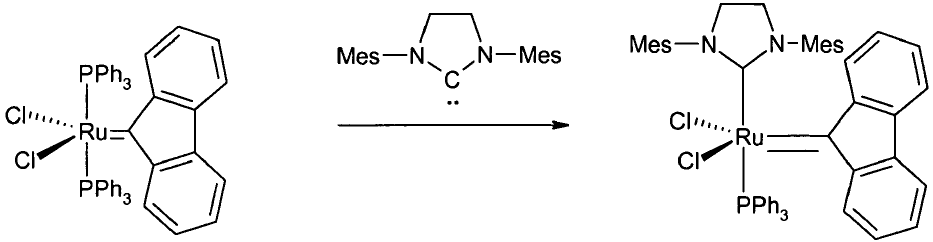

Diese Umsetzung wird üblicherweise bei einer Temperatur im Bereich von -20°C bis 80°C, vorzugsweise im Bereich von 0°C bis 50°C durchgeführt.

Liegt das Molverhältnis der Verbindung der allgemeinen Formel (IIa') zur Verbindung der Formel (XVIIIa) oder (XVIIIb) im Bereich von 1:0,5 bis 1:1,5, vorzugsweise bei 1:1, so wird üblicherweise ein Ligand L¹ oder L² durch einen Im-Liganden ausgetauscht.

Liegt das Molverhältnis der Verbindung der allgemeinen Formel (IIa') zur Verbindung der Formel (XVIIIa) oder (XVIIIb) im Bereich von 1:2 bis 1:5, vorzugsweise bei 1:2 bis 1:3, so werden üblicherweise zwei Im-Liganden eingeführt.

Die Umsetzung wird in gesättigten, ungesättigten oder aromatischen Kohlenwasserstoffen, oder in Ethern oder deren Mischungen durchgeführt. Bevorzugt sind Ether, insbesondere Diethylether, da das Reaktionsprodukt hierin unlöslich ist.

Ausgehend von den nach dem zweistufigen Verfahren erhaltenen erfindungsgemäßen Katalysatoren der allgemeinen Formel (IIa), die neben einem Im-Liganden (L¹) noch einen Phosphin-Liganden (L²) enthalten, ist es möglich, in einem dritten Schritt den Phosphin-Liganden (L²) durch einen anderen Liganden L² auszutauschen, bei dem es sich um einen Stickstoff-haltigen, bevorzugt aromatischen Heterocyclus handelt, insbesondere um Pyridin oder dessen Derivate mit den auf den Seite 10 und 11 angegebenen Bedeutungen.

Bei diesen Umsetzungen wird immer nur ein Stickstoff-haltiger, bevorzugt aromatischer Heterocyclus in den erfindungsgemäßen Katalysator der allgemeinen Formel (IIa), der bereits das Strukturelement (I) aufweist, eingeführt.

Der zuvor angesprochene Phosphin/Pyridinaustausch wird in Analogie zu den von Grubbs in WO-A-03/011455 beschriebenen Umsetzungen durchgeführt.

Im übrigen sind aus der Literatur eine Vielzahl von Verfahren bekannt, um Übergangsmetall-Komplexkatalysatoren mit Carben-Liganden zu synthetisieren und prinzipiell Carben-Liganden in Übergangsmetall-Komplexkatalysatoren einzuführen. Hierzu gehören beispielsweise WO-A-96/04289, WO-A-97/06185, WO-A-00/71554, US 2002/0107138 Al, WO-A-2004/035596, WO-A-03/011455. Auch aus US-A-2003/0100776, WO-A-2003/011455 und WO-A-2003/087167 sind derartige Synthesen bekannt. Auf Basis solcher Literaturverfahren ist dem Fachmann eine Synthese der erfindungsgemäßen Katalysatoren möglich.

### Einsatz der erfindungsgemäßen Katalysatoren zur Metathese:

**Gegenstand der Erfindung** ist ferner die Verwendung der erfindungsgemäßen Katalysatoren in Metathese-Reaktionen.

Bei den Metathese-Reaktionen handelt es sich um die in WO-A-97/06185 und Platinum Metals Rev., 2005, 49, (3), 123-137 beschriebenen Metathesereaktionen, insbesondere um Ringschlussmetathesen (RCM), Kreuzmetathesen (CM), Ringöffnungsmetathesen (ROM), ringöffnende Metathesepolymerisationen (ROMP), cyclische Dien Metathesepolymerisationen (ADMET), Selbstmetathesen, Umsetzung von Alkenen mit Alkinen (enin-Reaktionen), Polymerisation von Alkinen und die Olefinierung von Carbonylen.

Die erfindungsgemäßen Katalysatoren eignen sich beispielsweise für die Ring-Closing-Metathese von Diethyldiallylmalonat, Diallylmalononitril und zwar unter Inertgasatmosphäre oder auch unter aeroben Bedingungen.

Bevorzugt werden die erfindungsgemäßen Katalysator-Systeme für die Metathese von Nitrilkautschuk verwenden. Es handelt sich dabei um ein Verfahren zum Molekulargewichtsabbau des Nitrilkautschuks, indem man den Nitrilkautschuk mit dem erfindungsgemäßen Katalysator in Kontakt bringt. Bei dieser Reaktion handelt es sich um eine Kreuzmetathese.

Alle vorgenannten Katalysatoren des Typs (B) können entweder als solche im Reaktionsgemisch der NBR-Metathese eingesetzt werden oder aber auch auf einem festen Träger aufgebracht und immobilisiert werden. Als feste Phasen bzw. Träger sind solche Materialien geeignet, die einerseits inert gegenüber dem Reaktionsgemisch der Metathese sind und zum anderen die Aktivität des Katalysators nicht beeinträchtigen. Einsetzbar sind zur Immobilisierung des Katalysators beispielsweise Metalle, Glas, Polymere, Keramik, organische Polymerkügelchen oder auch anorganische Sol-Gele, Ruß, Kieselsäure, Silikate, Calciumcarbonat und Bariumsulfat.

Die Menge des Metathese-Katalysators bezogen auf den eingesetzten Nitrilkautschuk hängt von der Natur sowie katalytischen Aktivität des speziellen Katalysators ab. Die Menge an eingesetztem Katalysator beträgt üblicherweise 1 bis 1.000 ppm Edelmetall, bevorzugt 2 bis 500 ppm, insbesondere 5 bis 250 ppm, bezogen auf den eingesetzten Nitrilkautschuk.

Die NBR-Metathese kann in Abwesenheit oder aber in Gegenwart eines Co-Olefins durchgeführt werden. Bei diesem Co-Olefm handelt es sich bevorzugt um ein geradkettiges oder verzweigtes C₂-C₁₆-Olefin. Geeignet sind beispielsweise Ethylen, Propylen, Isobuten, Styrol, 1-Hexen oder 1-Octen. Bevorzugt wird 1-Hexen oder 1-Octen verwendet. Sofern das Co-Olefin flüssig ist (wie beispielsweise 1-Hexen), liegt die Menge des Co-Olefins bevorzugt in einem Bereich von 0,2-20 Gew.% bezogen auf den eingesetzten Nitrilkautschuk. Sofern das Co-Olefin ein Gas ist, wie beispielsweise Ethylen, wird die Menge des Co-Olefins so gewählt, dass sich im Reaktionsgefäß bei Raumtemperatur ein Druck im Bereich von 1 x 10⁵ Pa - 1 x 10⁷ Pa einstellt, bevorzugt ein Druck im Bereich von 5,2 x 10⁵ Pa bis 4 x 10⁶ Pa.

Die Metathese-Reaktion kann in einem geeigneten Lösungsmittel durchgeführt werden, welches den eingesetzten Katalysator nicht deaktiviert und die Reaktion auch nicht in irgendeiner anderen Weise negativ beeinflusst. Bevorzugte Lösungsmittel umfassen, sind aber nicht begrenzt auf, Dichlormethan, Benzol, Toluol, Methylethylketon, Aceton, Tetrahydrofuran, Tetrahydropyran, Dioxan und Cyclohexan. Das besonders bevorzugte Lösungsmittel ist Chlorbenzol. In manchen Fällen, wenn das Co-Olefin selbst als Lösungsmittel fungieren kann, so z.B. bei 1-Hexen, kann auch auf den Zusatz eines weiteren zusätzlichen Lösungsmittels verzichtet werden.

Die Konzentration des eingesetzten Nitrilkautschuks in der Reaktionsmischung der Metathese ist nicht kritisch, aber es ist natürlich zu beachten, dass die Reaktion nicht durch eine viel zu hohe Viskosität der Reaktionsmischung und die damit verbundenen Mischungsprobleme negativ beeinflusst werden sollte. Bevorzugt liegt die Konzentration des NBR in der Reaktionsmischung im Bereich von 1 bis 25 Gew.%, besonders bevorzugt im Bereich von 5 bis 20 Gew.%, bezogen auf die gesamte Reaktionsmischung.

Der Metathese Abbau wird üblicherweise bei einer Temperatur im Bereich von 10°C bis 150°C durchgeführt, bevorzugt bei einer Temperatur im Bereich von 20 bis 100 °C.

Die Reaktionszeit hängt von einer Reihe von Faktoren ab, beispielsweise vom Typ des NBR, der Art des Katalysators, der verwendeten Katalysator-Konzentration und der Reaktionstemperatur. Typischerweise ist die Reaktion innerhalb von drei Stunden unter normalen Bedingungen beendet. Der Fortschritt der Metathese kann durch Standard-Analytik überwacht werden, z.B. durch GPC-Messungen oder durch Bestimmung der Viskosität.

Als Nitrilkautschuke ("NBR") können in die Metathese-Reaktion Co- oder Terpolymere eingesetzt werden, welche Wiederholungseinheiten mindestens eines konjugierten Diens, mindestens eines α,β-ungesättigten Nitrils und gegebenenfalls einer oder mehrerer weiterer copolymerisierbarer Monomere enthalten.

Das konjugierte Dien kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Einen besonders bevorzugten Nitrilkautschuk stellt somit ein Copolymer aus Acrylnitril und 1,3-Butadien dar.

Neben dem konjugierten Dien und dem α,β-ungesättigten Nitril können noch ein oder mehrere weitere dem Fachmann bekannte, copolymerisierbare Monomere eingesetzt werden, z.B. α,β-ungesättigte Mono- oder Dicarbonsäuren, deren Ester oder Amide. Als α,β-ungesättigte Mono- oder Dicarbonsäuren sind dabei Fumarsäure, Maleinsäure, Acrylsäure und Methacrylsäure bevorzugt. Als Ester der α,β-ungesättigten Carbonsäuren werden vorzugsweise deren Alkylester und Alkoxyalkylester eingesetzt. Besonders bevorzugte Alkylester der α,β-ungesättigten Carbonsäuren sind Methylacrylat, Ethylacrylat, Butylacrylat, Butylmethacrylat, 2-Ethylhexylacrylat, 2-Ethylhexylmethacrylat und Octylacrylat. Besonders bevorzugte Alkoxyalkylester der α,β-ungesättigten Carbonsäuren sind Methoxyethyl(meth)acrylat, Ethoxyethyl(meth)acrylat und Methoxyethyl(meth)acrylat. Einsetzbar sind auch Mischungen von Alkylestern, wie z.B. den vorgenannten, mit Alkoxyalkylestem, z.B. in Form der vorgenannten.

Die Anteile an konjugiertem Dien und α,β-ungesättigtem Nitril in den einzusetzenden NBR-Polymeren können in weiten Bereichen schwanken. Der Anteil des oder der Summe der konjugierten Diene liegt üblicherweise im Bereich von 40 bis 90 Gew.-%, bevorzugt im Bereich von 60 bis 85 Gew. %, bezogen auf das Gesamtpolymer. Der Anteil des oder der Summe der α,β-ungesättigten Nitrile liegt üblicherweise bei 10 bis 60 Gew.-%, bevorzugt bei 15 bis 40 Gew.-%, bezogen auf das Gesamtpolymer. Die Anteile der Monomere summieren sich jeweils zu 100 Gew.-% auf. Die zusätzlichen Monomere können in Mengen von 0 bis 40 Gew.%, bevorzugt 0,1 bis 40 Gew.-%, besonders bevorzugt 1 bis 30 Gew.-%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Die Herstellung der Nitrilkautschuke durch Polymerisation der vorgenannten Monomere ist dem Fachmann hinlänglich bekannt und in der Literatur umfangreich beschrieben.

Nitrilkautschuke, die im erfindungsgemäßen Sinn verwendet werden können, sind ferner käuflich erhältlich, z.B. als Produkte aus der Produktreihe der Marken Perbunan^{®} und Krynac^{®} von der Lanxess Deutschland GmbH.

Die zur Metathese eingesetzten Nitrilkautschuke besitzen eine Mooney-Viskosität (ML 1+4 bei 100°C) im Bereich von 30 bis 70, bevorzugt von 30 bis 50. Dies entspricht einem Gewichtsmittel des Molekulargewicht M_{w} im Bereich von 150.000 - 500.000, bevorzugt im Bereich von 180.000 - 400.000. Die eingesetzten Nitrilkautschuke besitzen ferner eine Polydispersität PDI = M_{w}/Mₙ, wobei M_{w} das Gewichtsmittel und Mₙ das Zahlenmittel des Molekulargewichts darstellt, im Bereich von 2,0 - 6,0 und bevorzugt im Bereich von 2,0 - 4,0.

Die Bestimmung der Mooney-Viskosität erfolgt dabei gemäß ASTM Norm D 1646.

Die durch das erfindungsgemäße Metathese-Verfahren erhaltenen Nitrilkautschuke besitzen eine Mooney-Viskosität (ML 1+4 bei 100°C) im Bereich von 5 - 30, bevorzugt im Bereich von 5 - 20. Dies entspricht einem Gewichtsmittel des Molekulargewicht M_{w} im Bereich von 10.000-100.000, bevorzugt im Bereich von 10.000-80.000. Die erhaltenen Nitrilkautschuke besitzen ferner eine Polydispersität PDI = M_{w}/Mₙ, wobei Mₙ das Zahlenmittel des Molekulargewichts darstellt, im Bereich 1,4 - 4,0 bevorzugt im Bereich von 1,5 - 3,0.

### Salzzusätze bei der Metathese:

In einer Ausführungsform kann die NBR Metathese in Gegenwart eines oder mehrerer Salze durchgeführt werden, die die allgemeine Formel (XIX)

Kⁿ⁺ A^{z-} (XIX)

besitzen, worin
- K: ein Kation und
- A: ein Anion darstellt, wobei
- n: 1, 2 oder 3 ist und
- z: 1, 2 oder 3 ist.

Geeignete **Kationen** basieren auf Elementen aus dem Periodensystem (Hauptgruppen und Nebengruppenelemente), die ein-, zwei- oder dreifach positiv geladene Kationen bilden können.

Geeignete **Kationen** sind beispielsweise Lithium, Natrium, Kalium, Rubidium, Cäsium, Francium, Beryllium, Magnesium, Calcium, Strontium, Barium, Aluminium, Gallium, Indium, Thallium, Germanium, Zinn, Blei, Arsen, Antimon, Bismut, Scandium, Yttrium, Titan, Zirkonium, Hafnium, Vanadin, Niob, Tantal, Chrom, Molybdän, Wolfram, Mangan, Technetium, Rhenium, Eisen, Ruthenium, Osmium, Cobalt, Rhodium, Iridium, Nickel, Palladium, Platin, Silber, Gold, Zink, Cadmium, Quecksilber, sowie alle Elemente aus den Gruppen der Seltenen Erden insbesondere Cer, Praseodym und Neodym sowie die Elemente der Actiniden.

Geeignete Kationen sind ferner **komplexe Kationen** auf der Basis von Stickstoff, Phosphor oder Schwefel. Einsetzbar sind beispielsweise Tetralkyl-Ammonium-, Tetraaryl-Ammonium-, Hydroxylammonium-, Tetraalkyl-Phosphonium-, Tetraaryl-Phosphonium-, Sulfonium-, Anilinium-, Pyridinium-, Imidazolonium-, Guanidinium- und Hydrazinium-Kationen sowie kationische Ethylendiamin-Derivate.

Die Alkyl-Reste in allen vorgenannten komplexen Kationen können gleich oder verschieden sein und stehen üblicherweise jeweils für einen geradkettigen oder verzweigten C₁-C₃₀-Alkylrest, bevorzugt C₁-C₂₀-Alkylrest, besonders bevorzugt C₁-C₁₈-Alkylrest. Diese Alkyl-Reste können dabei auch durch Aryl-Reste substituiert sein. C₁-C₁₈-Alkyl umfasst beispielsweise Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, n-Octyl, n-Nonyl, n-Decyl, n-Undecyl, n-Dodecyl, n-Tridecyl, n-Tetradecyl, n-Hexadecyl, n-Octadecyl sowie Benzyl.

Die Aryl-Reste in allen vorgenannten komplexen Kationen können ebenfalls gleich oder verschieden sein und stehen üblicherweise für einen C₅-C₂₄-Arylrest, bevorzugt C₆-C₁₄-Arylrest, besonders bevorzugt C₆-C₁₀-Arylrest. Beispiele für C₅-C₂₄-Aryl sind Phenyl, o-, p-, m-Tolyl, Naphthyl, Phenanthrenyl, Anthracenyl oder Fluorenyl.

Die Sulfonium-Kationen des Typs [R₃S]⁺ weisen drei gleiche oder verschiedene Reste auf, die aliphatischen oder aromatischen Charakter haben können. Bei diesen Resten kann es sich um Alkyl- oder Aryl-Reste mit den genannten allgemeinen, bevorzugten und besonders bevorzugten Bedeutungen handeln.

Besonders bevorzugte komplexe Kationen sind Benzyldodecyldimethylammonium-, Didecyldimethylammonium-, Dimethylanilinium-, N-Alkyl-N,N-bis-(2-hydroxyalkyl)-N-benzylammonium-, N,N,N-Triethylbenzolmethanaminium, O-Methyluronium-, S-Methylthiuronium-, Pyridinium-, Tetrabutylammonium-, Tetramethyluronium-, Tetracetylammonium-, Tetrabutylphosphonium-, Tetraphenylphosphonium-, Diphenylguanidinium-, Di-o-tolylguanidinium-, Butyldiphenylsulfonium-, Tributylsulfonium.

In der allgemeinen Formel (I) ist A ein ein-, zwei- oder dreifach geladenes Anion, bevorzugt aus der Gruppe der Halogenide, der Pseudohalogenide, der komplexen Anionen, der Anionen organischer Säuren, der aliphatischen oder aromatischen Sulfonate, der aliphatischen oder aromatischen Sulfate, der Phosphonate, der Phosphate, der Thiophosphate, der Xanthogenate, der Dithiocarbamate sowie der nicht koordinierenden Anionen.

Bevorzugte **Halogenide** sind Fluorid, Chlorid, Bromid und Jodid.

Bevorzugte **Pseudohalogenide** sind beispielsweise Trijodid, Azid, Cyanid, Thiocyanid, Thiocyanat sowie Interhalogenide.

Geeignete **komplexe Anionen** sind beispielsweise Sulfit, Sulfat, Dithionit, Thiosulfat, Carbonat, Hydrogencarbonat, Perthiocarbonat, Nitrit, Nitrat, Perchlorat, Tetrafluoroborat, Tetrafluoroaluminat, Hexafluorophosphat, Hexafluoroarsenat, Hexafluoroantimonat und Hexachloroantimonat.

Bevorzugte ein-, zwei- oder dreifach geladene **Anionen organischer Säuren** sind ein-, zwei- oder dreifach geladene Anionen organischer Carbonsäuren mit 1 bis 20 C-Atomen. Die organischen Carbonsäuren können dabei gesättigt oder auch ein- oder mehrfach ungesättigt sein. Ausgewählte Beispiele sind Formiat, Acetat, Propionat, Butyrat, Oleat, Palmitat, Stearat, Versatat, Acrylat, Methacrylat, Crotonat, Benzoat, Naphthalincarbonat, Oxalat, Salicylat, Terephthalat, Fumarat, Maleinat, Itaconat und Abietat.

Geeignete **aliphatische oder aromatischer Sulfonate** sind Anthrachinon-2-sulfonat, Benzolsulfonat, Benzol-1,3-disulfonat, Decan-1-sulfonat, Hexadecan-1-sulfonat, Hydrochinonmonosulfonat, Methyl-4-toluolsulfonat, Naphthalin-1-sulfonat, Naphthalin-1,5-disulfonat, Tosylat und Mesylat.

Geeignete **aliphatische oder aromatische Sulfate** sind beispielsweise Dodecylsulfat und Alkylbenzolsulfate.

Geeignete **Phosphonate, Phosphate und Thiophosphate** sind Vinylphosphonat, Ethylphosphonat, Butylphosphonat, Cetylphosphonat, Dibutylphosphat, Dioctylphosphat, Dibutyldithiophosphat, und Dioctylthiophosphat.

Geeignete **aliphatische oder aromatische Xanthogenate** sind Ethylxanthogenat, Butylxanthogenat, Phenylxanthogenat, Benzylxanthogenat etc.

Geeignete **aliphatische oder aromatische Dithiocarbamate** sind Dimethyldithiocarbamat, Diethyldithiocarbamat, Dibutyldithocarbamat und Dibenzyldithiocarbamat.

**Nichtkoordinierende Anionen** sind beispielsweise Tetrakis[pentafluorphenyl]borat, Pentakis-[pentafluorphenyl]phosphat, Tetrakis[3,5-trifluormethylphenyl]borat, Pentakis[3,5-trifluormethylphenyl]phosphat und Pentakis[pentafluorphenyl]cyclohexadienylanion.

Bevorzugt werden beispielsweise Alkalimetallhalogenide wie Lithiumchlorid, -bromid oder -iodid und Cäsiumbromid eingesetzt.

Bevorzugt werden ferner beispielsweise Erdalkalimetallchloride wie Calciumchlorid und Magnesiumchlorid eingesetzt.

### Menge Salz: Nitrilkautschuk:

Im erfindungsgemäßen Katalysator-System wird der Metathese-Katalysator und das oder die Salze der allgemeinen Formel (I) in einem Gewichtsverhältnis Salz(e) : Metathesekatalysator von 0,01:1 bis 10000:1, bevorzugt 0,1:1 1 bis 1000:1, besonders bevorzugt 0,5:1 bis 500:1 eingesetzt.

Das oder die Salze können in einem Lösungsmittel oder auch ohne Lösungsmittel zum Metathese-Katalysator oder dessen Lösung gegeben werden.

Als Lösungsmittel bzw. Dispergiermittel, mit dem das oder die Salze dem Katalysator bzw. dessen Lösung zugesetzt wird, können alle bekannten Lösungsmittel verwendet werden. Für die Wirksamkeit des Salz-Zusatzes ist es nicht unbedingt erforderlich, dass das oder die Salze in dem Lösungsmittel eine hohe Löslichkeit aufweist. Bevorzugte Lösungsmittel umfassen, sind aber nicht beschränkt auf, Aceton, Benzol, Chlorbenzol, Chloroform, Cyclohexan, Dichlormethan, Dioxan, Dimethylformamid, Dimethylacetamid, Dimethylsulfon, Dimethylsufoxid, Methylethylketon, Tetrahydrofuran, Tetrahydropyran und Toluol. Vorzugsweise ist das Lösungsmittel gegenüber dem Metathese-Katalysator inert.

Sofern die erfindungsgemäßen Katalysatoren für die Metathese von Nitrilkautschuk eingesetzt werden, liegt die Menge, in der das Salz bezogen auf den abzubauenden Kautschuk verwendet werden, in einem Bereich von 0,0001 phr bis 50 phr, bevorzugt 0,001 phr bis 35 phr (phr = Gew.Teile auf 100 Gew.-Teile Kautschuk).

Auch für den Einsatz zur NBR Metathese kann das Salz in einem Lösungs- oder Dispergiermittel oder auch ohne Lösungs- bzw. Dispergiermittel zu einer Lösung des Metathese-Katalysators gegeben werden. Alternativ dazu kann das Salz auch direkt einer Lösung des abzubauenden Nitrilkautschuks zugegeben werden, der darüber hinaus der Metathese-Katalysator zugegeben wird.

### Zusatz von Übergangsmetall-Alkoxiden:

In den Metathese Verfahren, insbesondere dem Metathese Abbau von NBR, können auch Übergangsmetall-Alkoxide zugesetzt werden.

Hierbei handelt es sich um Verbindungen der allgemeinen Formel (XX)

M'(OZ')_{m'} (XX)

wobei
- M': ein Übergangsmetall der 4., 5. oder 6. Nebengruppe des Periodensystems der Elemente darstellt,
- m': 4, 5 oder 6 ist und
- Z': gleich oder verschieden ist und einen linearen, verzweigten, aliphatischen, cyclischen, heterocyclischen oder aromatischen Rest mit 1-32 Kohlenstoffatome darstellt, der zusätzlich noch 1 bis 15 Heteroatome aufweisen kann,
in Kontakt gebracht wird.

Geeignete Übergangsmetalle der 4., 5. und 6. Nebengruppe in den Verbindungen der allgemeinen Formel (XX) sind Titan, Zirkon, Hafnium, Vanadin, Niob, Tantal, Chrom, Molybdän und Wolfram.

In den Verbindungen der allgemeinen Formel (XX) sind die Reste Z' gleich oder verschieden und stellen lineare, verzweigte, aliphatische, cyclische, heterocyclische oder aromatische Reste mit 1-30 Kohlenstoffatome dar, die zusätzlich noch 1 bis 15 Heteroatome, bevorzugt Stickstoff oder Sauerstoff, aufweisen können.

Unter der Maßgabe, dass die Reste Z' 1-32 Kohlenstoffatome besitzen und zusätzlich noch 1 bis 15 Heteroatome, bevorzugt Stickstoff oder Sauerstoff, aufweisen können, kann es sich bei Z' um geradkettiges oder verzweigtes C₁-C₃₀-Alkyl, bevorzugt C₁-C₂₀-Alkyl, besonders bevorzugt C₁-C₁₂-Alkyl, C₃-C₂₀-Cycloalkyl, bevorzugt C₃-C₁₀-Cycloalkyl, besonders bevorzugt C₅-C₈-Cycloalkyl, C₂-C₂₀-Alkenyl, bevorzugt C₂-C₁₈-Alkenyl, C₂-C₂₀-Alkinyl-, um einen Rest der allgemeinen Formel (-CHZ"-CHZ"-A²-)ₚ-CH₂-CH₃, wobei p eine ganze Zahl von 1 bis 10 ist, Z" gleich oder verschieden und Wasserstoff oder Methyl bedeuten, bevorzugt die an benachbarten C-Atomen sitzenden Z¹ ungleich sind, und A² Sauerstoff, Schwefel oder -NH bedeutet, um einen C₆-C₂₄-Aryl, bevorzugt C₆-C₁₄-Aryl oder einen C₄-C₂₃-Heteroaryl-Rest, wobei diese Heteroaryl-Reste mindestens 1 Heteroatom, bevorzugt Stickstoff oder Sauerstoff aufweisen, handeln.

Bevorzugt werden Verbindungen der allgemeinen Formel (XX) eingesetzt, worin
- M: Titan, Zirkon, Hafnium, Vanadin, Niob, Tantal, Chrom, Molybdän oder Wolfram bedeutet,
- m: 4, 5 oder 6 ist und
- Z: Methyl, Ethyl, n-Propyl, i-Propyl, n-Butyl, i-Butyl, tert-Butyl, n-Pentyl, i-Pentyl, t-Pentyl, Dodecyl, Oleyl, Phenyl oder sterisch gehindertes Phenyl bedeutet.

Besonders bevorzugt werden im erfindungsgemäßen Verfahren als Verbindungen der allgemeinen Formel (I) Tetraethoxytitanat, Tetraisopropyloxytitanat, Tetra-tert-butyloxytitanat, Tetra-tert-butyloxyzirkonat, Pentaethoxyniobat und Pentaethoxytantalat eingesetzt.

### Hydrierung:

An den Metathese Abbau in Gegenwart des erfindungsgemäßen Katalysator-Systems kann sich eine Hydrierung der erhaltenen abgebauten Nitrilkautschuke anschließen. Diese kann in einer dem Fachmann bekannten Art und Weise erfolgen.

Es ist möglich, die Hydrierung unter Einsatz homogener oder heterogener Hydrierkatalysatoren durchzuführen. Es ist ferner möglich, die Hydrierung in-situ durchzuführen, d.h. in dem gleichen Reaktionsgefäß, in dem zuvor auch der Metathese-Abbau erfolgte und ohne Notwendigkeit, den abgebauten Nitrilkautschuk zu isolieren. Der Hydrierkatalysator wird einfach dem Reaktionsgefäß zugesetzt.

Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B.US-A-3,700,637**,** DE-A-25 39 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196**).**

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium- oder Ruthenium-haltigen Katalysators erreicht werden. Einsetzbar ist beispielsweise ein Katalysator der allgemeinen Formel

(R¹ₘB)ₗ M X_{n,}

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicyclalkyl-monoaryl-Resten.

Beispiele von Co-Katalysatoren finden sich beispielsweise in US-A-4,631,315**.** Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodiumhaltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden. Besonders bevorzugt sind auch Restgehalte von Doppelbindungen im HNBR von 0 bis 8%.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Nach Abschluss der Hydrierung erhält man einen hydrierten Nitrilkautschuk mit einer Mooney-Viskosität (ML 1+4 bei 100°C), gemessen gemäß ASTM Norm D 1646, im Bereich von 10 - 50, bevorzugt von 10 bis 30. Dies entspricht einem Gewichtsmittel des Molekulargewicht M_{w} im Bereich von 2.000 - 400.000 g/mol, bevorzugt im Bereich von 20.000 - 200.000. Die erhaltenen hydrierten Nitrilkautschuke besitzen ferner eine Polydispersität PDI= M_{w}/Mₙ, wobei M_{w} das Gewichtsmittel und Mₙ das Zahlenmittel des Molekulargewichts darstellt, im Bereich von 1- 5 und bevorzugt im Bereich von 1,5 - 3.

Durch den Einsatz der erfindungsgemäßen Katalysatoren werden sehr gute Ergebnisse bei den verschiedenen Formen der Metathese erhalten. Beim Einsatz für den Abbau von Nitrilkautschuken können abgebaute Nitrilkautschuke mit deutlich niedrigeren Molekulargewichten M_{w} und Mₙ und guten Polydispersitäten erreicht werden.

### BEISPIELE

Als Katalysatoren des Standes der Technik wurden in den nachfolgenden Beispielen eingesetzt:

### "Grubbs III Katalysator":

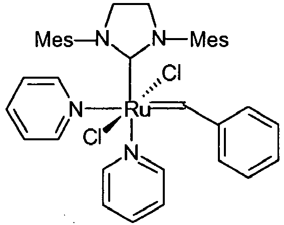

Der Grubbs III Katalysator wurde wie in Angew. Chem. Int. Ed., 2002, 41(21), 4035 beschrieben hergestellt.

### "Grubbs II Katalysator":

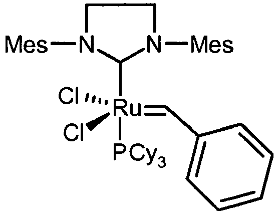

Der Grubbs II Katalysator wurde von Materia Inc. (Pasadena/Califomia) bezogen.

### I Herstellung der erfindungsgemäßen Katalysatoren

### 1.1 Dichloro(fluorenyliden)bis(triphenylphosphino)ruthenium (1)

### 1.1.1 Fluorenon-tosylhydrazon (A) (in Anlehnung an D. A. Van Galen, J. H. Barnes, M. D. Hawley J. Org. Chem. 1986, 51, 2544.)

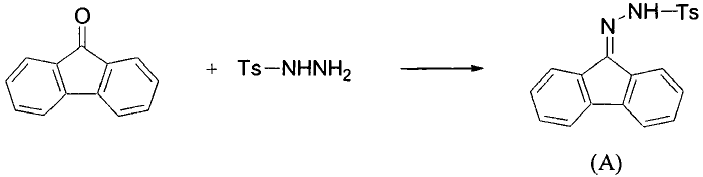

Eine Mischung aus 5.41 g 9-Fluorenon (30 mmol), 5.59 g Toluol-4-sulfonsäurehydrazid (95 % Reinheit; 30 mmol) und 30 ml Ethanol wurde für 30 Minuten unter Rückflussbedingungen erhitzt. Man erhielt eine klare, gelbe Lösung, aus der beim Abkühlen auf Raumtemperatur hellgelbe Kristalle ausfallen. Die Kristalle wurden abfiltriert, mit 2 × 3 ml Ethanol gewaschen und an Luft getrocknet. Die Ausbeute beträgt 9.51 g (91 %).

**¹H NMR (300 MHz, CDCl₃):** δ 8.37 (breit s, 1H), 7.97 (d, *J* = 8.1 Hz, 2H), 7.87 (d, *J* = 7.7 Hz, 1H), 7.72 (d, *J* = 7.5 Hz, 1H), 7.65 (d, *J* = 7.5 Hz, 1H), 7.54 (d, *J* = 7.5 Hz, 1H), 7.45 (t, *J* = 7.5 Hz, 1H), 7.39-7.30 (m, 4H), 7.26 (t, *J* = 7.5 Hz, 1H), 2.41 (s, 3H).

### 1.1.2 9-Diazofluoren (B) (in Anlehnung an A. Jończyk, J. Wlostowska Synth. Commun. 1978, 8, 569.)

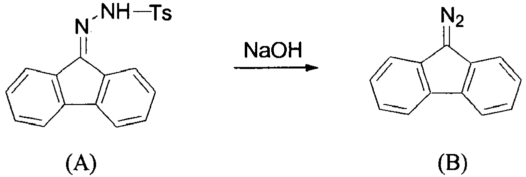

Eine Mischung aus 2.09 g Fluorenon-tosylhydrazon (1) (6 mmol), 15 ml Dioxan und 2 ml 50 % wässriger NaOH wurde bei 85 °C für 1 h intensiv gerührt. Die ursprünglich zweiphasige und orange gefärbte Reaktionsmischung änderte ihre Farbe dabei zu rot. Bereits nach 10 Minuten beginnt TsNa als weisser Niederschlag auszufallen. Die Reaktionsmischung wurde auf Raumtemperatur abgekühlt und mit 10 ml Wasser versetzt. Die organische Phase wurde abgetrennt und die verbleibende Wasserphase mit 2 × 6 ml Pentan extrahiert. Die vereinigten organischen Phasen wurden noch mit 2 × 4 ml Wasser ausgeschüttelt. Ohne weitere Trocknung wurden die Lösungsmittel im Vakuum entfernt.

Man erhielt 9-Diazofluoren (2) als orangefarbiges Pulver mit einer Ausbeute von 1.08 g (94 %).

**¹H NMR (300 MHz, CDCl₃):** δ 7.96 (dm, *J* = 7.4 Hz, 2H), 7.52 (dm, *J* = 7.5 Hz, 2H), 7.40 (dt, *J* = 7.4 and 1.3 Hz, 2H), 7.33 (dt, *J* = 7.4 and 1.3 Hz, 2H).

### 1.1.3 Herstellung von Dichloro(fluorenyliden)bis(triphenylphosphino)ruthenium (K1) (als äquimolare Mischung von Dichloro(fluorenyliden)bis(triphenylphosphino) ruthenium (K1) mit Fluorenylidentriphenylphosphazin (P1) ("K1 + P1"))

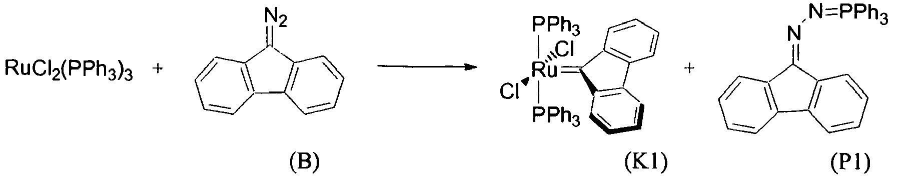

In einem Schlenkgefäß mit Stickstoffatmosphäre und Magnetrührstab wurden 1.918 g RuCl₂(PPh₃)₃ (2.0 mmol) und 10 ml getrocknetes CH₂Cl₂ vorgelegt. Die entstandene Lösung wurde auf 40 °C erwärmt und über einen Zeitraum von 30 Minuten hinweg eine zweite Lösung aus 0.769 g 9-Diazofluoren (4.0 mmol) in 10 ml wasserfreiem CH₂Cl₂ zugetropft. Anschließend wurde bei 40 °C noch 80 Minuten weitergerührt. Dann wurde das Lösungsmittel im Hochvakuum entfernt. Das erhaltene Reaktionsprodukt enthielt neben dem Rutheniumcarben und Phosphazin auch noch etwa 2.5 mol % nicht umgesetztes RuCl₂(PPh₃)₃ wie ¹H NMR-spektroskopisch* gezeigt werden konnte. Zur Reinigung wurde das Rohprodukt daher gründlich mit 5 x 12 ml einer 1:2 Mischung aus Benzol-Hexan extrahiert.

Erhalten wurden dabei 2.57 g (97 % Ausbeute) eines rostfarbenen Pulvers.

Laut ¹H NMR Spektrum bestand dieses Pulver aus äquimolaren Mengen Dichloro(fluorenyliden)bis (triphenylphosphino)ruthenium (K1) und Fluorenylidentriphenylphosphazin (P1), was einem Carbengehalt von 65 % entspricht. Als Verunreinigung verblieb RuCl₂(PPh₃)₃ in einer Konzentration von ca. 0.8 mol %.

### 1.1.4 Dichloro(fluorenyliden)bis(triphenylphosphino)ruthenium (K1)

Die erwähnte Mischung aus Dichloro(fluorenyliden)bis(triphenylphosphino)ruthenium und Fluorenylidentriphenylphosphazin (K1 + P1) (1.40 g) wurde unter einer Stickstoffatmosphäre bei -20 °C säulenchromatographisch über Kieselgel (20 g) getrennt. Sowohl die Säule wie auch das Laufmittel (Toluol-THF 15:1) wurden auf -20 °C gekühlt. Etwa 100 ml eines dunkelbraunen Eluats wurden gewonnen, woraus nach Entfernung des Lösungsmittels 0.33 g Rohprodukt erhalten wurden. Diese Rohprodukt-Fraktion war noch mit Triphenylphosphin und Spuren von RuCl₂(PPh₃)₃ verunreinigt. Durch Extraktion mit einem Benzol-Hexan-Gemisch (1:2) wurde das reine Produkt K1 erhalten.

**¹H NMR (500 MHz, CD₂Cl₂):** δ 7.45 (m, 14H), 7.41 (t, *J=* 7.5 Hz, 6H), 7.37 (d, *J* = 7.7 Hz, 2H), 7.30 (d, *J* = 7.3 Hz, 2H), 7.25 (t, *J* = 7.7 Hz, 12H), 6.40 (dt, *J* = 7.6 and 1.1 Hz, 2H).

**³¹P NMR (202 MHz, CD₂Cl₂):** δ 32.2 (s).

**¹³C NMR (125 MHz, CD₂Cl₂):** δ 303.2 (t, C=Ru, J_{C-P} = 12.3 Hz), 147.8 (C), 139.0 (C), 135.4 (t, CH, J_{C-P} = 5.4 Hz), 131.6 (d, CH, J_{C-P} = 7.2 Hz), 130.8 (t, C, J_{C-P} = 21.5 Hz), 130.5 (CH), 129.3 (CH), 128.2 (t, CH, J_{C-P} = 4.8 Hz), 117.8 (CH).

**Anal.** Ber. für C₄₉H₃₈Cl₂P₂Ru: C: 68.37, H: 4.45. Gef.: C: 68.58, H: 4.53.

Für die Röntgenkristallstrukturanalyse geeignete Kristalle der Verbindung **1** wurden durch langsame Verdampfung einer benzolischen Lösung erhalten. Abbildung 1 zeigt die Struktur der Verbindung. Ausgewählte Bindungslängen (Å) lauten wie folgt: Ru-C1 1.862(3), Ru-C11 2.3505(8), Ru-C12 2.3487(8), Ru-P1 2.4070(8), Ru-P2 2.4066(9), C1-C2 1.479(4), C1-C13 1.501(4). Ausgewählte Bindungswinkel (°): C1-Ru-C11 99.49(9), C1-Ru-C12 99.28(9), C12-Ru-C11 161.23(3), C1-Ru-P1 100.53(8), C1-Ru-P2 99.03(8), C1-Ru-P2 99.03(8), C11-Ru-P1 84.98(3), C11-Ru-P2 92.42(3), Cl2-Ru-P1 91.62(3), Cl2-Ru-P2 84.62(3), P1-Ru-P2 160.43(3), C2-C1-Ru 128.8(2), C13-C1-Ru 127.8(2), C2-C1-C13 103.3(2).

### Abbildung 1. Struktur der Verbindung 1.

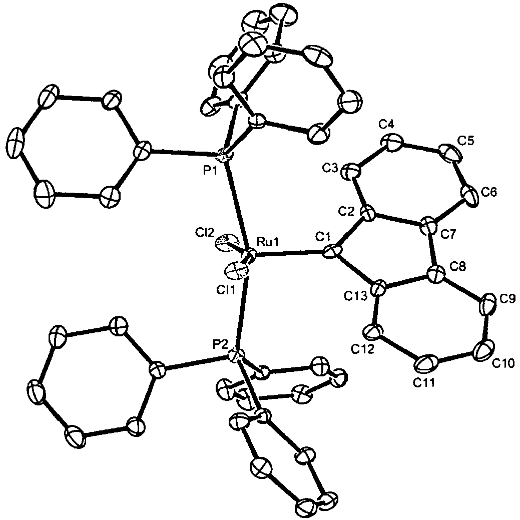

### 1.1.5 Fluorenylidentriphenylphosphazin (P1)

Das Phosphazin, das bei der oben genannten Chromatographie unter 1.1.4 auf der Säule zurückblieb, konnte mit dem polareren Laufmittelgemisch Toluol-THF 5:1 ebenfalls noch als hellbraune Fraktion eluiert werden. Nach dem Abdampfen des Laufmittels wird die Substanz aus einem Methylenchlorid-Hexan Gemisch in Form gelber Kristalle gewonnen. Die Struktur wurde mittels einer Röntgen-Kristallstrukturanalyse bestimmt.

**¹R NMR (300 MHz, CDCl₃):** δ 8.21 (d, *J=* 7.7 Hz, 2H), 7.81 (dd, *J=* 12.5 and 7.8 Hz, 6H), 7.67 (dt, *J* = 7.2 and 1.2 Hz, 3H), 7.54 (dt, *J* = 7.8 and 3.0 Hz, 6H), 7.03 (t, *J* = 7.3 Hz, 2H), 6.92 (t, *J* = 7.5 Hz, 2H), 6.38 (d, *J* = 8.0 Hz, 2H).

**³¹P NMR (121 MHz, CDCl₃):** δ 6.9 (s).

**¹³C NMR (75 MHz, CDCl₃):** δ 141.6 (d, C, J_{C-P} = 14.9 Hz), 134.2 (d, CH, J_{C-P} = 10.2 Hz), 132.7 (d, CH, J_{C-P} = 2.8 Hz), 130.8 (d, C, J_{C-P} = 14.1 Hz), 129.1 (d, CH, J_{C-P} = 12.2 Hz), 125.7 (d, C, J_{C-P} = 88.5 Hz), 122.8 (CH), 119.4 (d, CH, J_{C-P}= 1.5 Hz), 116.4 (CH), 115.9 (CH).

### 1.2 Dichloro(fluorenyliden)(1,3-dimesityldihydroimidazolyliden)(triphenylphosphino)-ruthenium (K2) (als äquimolare Mischung von Dichloro(fluorenyliden)(1,3-dimesityldihydroimidazolyliden)(triphenylphosphino)ruthenium (K2) und Fluorenylidentriphenyl-phosphazin (P1) ("K2 + P1")

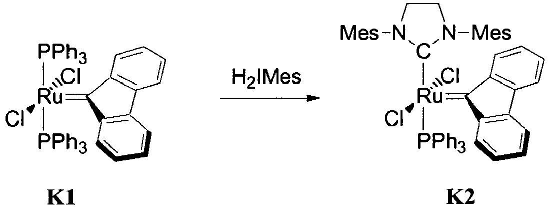

In einem Schlenkgefäß wurden 0.729 g 1,3-Dimesitylimidazoliniumtetrafluoroborat (1.85 mmol) und 8 ml trockenes Tetrahydrofuran unter einer Stickstoffatmosphäre mit Hilfe eines Magnetrührstabs vermischt. Erhalten wurde eine Suspension, zu der langsam 89 mg Natriumhydrid (60 % dispergiert in Mineralöl; 2.22 mmol) zugegeben werden. Die entstandene weiße Suspension wurde für 2 Stunden gerührt und dann abfiltriert. Das Filtrat wurde zur Trockenheit eingeengt, der erhaltene, wachsartige Feststoff wurde anschließend in 20 ml trockenen Diethylether erneut gelöst.

Diese etherische Lösung von 1,3-Dimesityldihydroimidazolyliden wurde tropfenweise zu einer Suspension aus insgesamt 2.44 g einer äquimolaren Mischung von Dichloro(fluorenyliden)bis-(triphenylphosphino)ruthenium und Fluorenylidentriphenylphosphazin **("K1+P1")** (65 % Reinheit; 1.84 mmol) in 20 ml trockenem Diethylether unter einer Stickstoffatmosphäre gegeben. Die Reaktionslösung wurde 2 Stunden bei Raumtemperatur gerührt und dann abfiltriert. Gründliches Extrahieren des Rohprodukts mit 5 × 20 ml Portionen Diethylether führte zur Entfernung von Spuren von Dichloro(fluorenyliden)bis(1,3-dimesityldihydroimidazolyliden)-ruthenium und nicht umgesetztem Dichloro(fluorenyliden)bis(triphenylphosphino)ruthenium.

Es verblieben 1.91 g (75 % Ausbeute) eines rostfarbenen Pulvers.

Gemäß dem ¹H NMR Spektrum,* bestand dieses Material aus gleichen Mengen (mol/mol) Dichloro(fluorenyliden)(1,3-dimesityldihydroimidazolyliden)(triphenylphosphino)ruthenium und Fluorenylidentriphenylphosphazin **("K2** + **P1"),** was einem Gehalt an K2 von 65 % entspricht. Die Restmenge an Dichloro(fluorenyliden)bis(triphenylphosphino)ruthenium (K1) beträgt etwa 1 %; ebenso wie die Menge des Nebenprodukts 1,3-Dimesitylimidazoliniumchlorid etwa 1 % ausmacht.

### 1.2.2 Dichloro(fluorenyliden)(1,3-dimesityldihydroimidazolyliden)(triphenylphosphino) ruthenium (K2)

Unter einer Stickstoffatmosphäre wurden 2.09 g einer äquimolaren Mischung aus Dichloro (fluorenyliden)bis(triphenylphosphino)ruthenium (K1) und Fluorenylidentriphenylphosphazin (P1) (65 % Reinheit; 1.5 mmol) sowie 16 ml trockenes CH₂Cl₂ in ein Schlenkgefäß gegeben. Diese Lösung wurde sorgfältig mit 50 ml trockenem Hexan überschichtet und für 2 Tage zur Kristallisation beiseite gestellt. Der gelb-braune Niederschlag wurde abfiltriert und aus dem Filtrat noch 1.0 g eines braunen Pulvers durch Abdampfen des Lösungsmittels erhalten. Das ¹H NMR Spektrum zeigt ein Molverhältnis der Komponenten **K2:P1** = 3.4 zueinander. Gründliches Waschen mit 5 × 30 ml Diethylether hinterlässt 0.57 g des reinen Produkts mit einem Molverhältnis der Komponenten **K2:P1** = 27 zueinander, was einem Gehalt an K2 von 98 % entspricht.

**¹H NMR (500 MHz, CD₂Cl₂):** δ 7.81 (d, *J* = 7.7 Hz, 2H), 7.41 (t, *J=* 7.1 Hz, 2H), 7.23 (t, *J* = 7.3 Hz, 3H), 7.19 (s, 2H), 7.10 (d, *J* = 7.3 Hz, 2H), 6.99 (dt, *J* = 7.7 and 1.7 Hz, 6H), 6.92 (t, *J* = 8.5 Hz, 6H), 6.64 (t, *J* = 7.5 Hz, 2H), 5.86 (s, 2H), 4.02 (dd, *J* = 11.8 and 8.9 Hz, 2H), 3.78 (dd, *J* = 11.8 and 8.9 Hz, 2H), 2.76 (s, 6H), 2.51 (s, 3H), 1.85 (s, 3H), 1.84 (s, 6H).

**³¹P NMR (202 MHz, CD₂Cl₂):** δ 26.9 (s).

**¹³C NMR (125 MHz, CD₂Cl₂):** δ 302.9 (d, C=Ru, J_{C-P} = 13.8 Hz), 212.1 (d, N-C-N, J_{C-P}= 99.7 Hz), 148.5 (d, C, J_{C-P}= 3.1 Hz), 139.6 (C), 139.2 (C), 138.6 (C), 137.0 (C), 136.9 (C), 136.5 (C), 136.2 (C), 134.9 (d, CH, J_{C-P}= 9.8 Hz), 132.3 (C), 132.0 (C), 131.1 (CH), 130.4 (CH), 130.2 (CH), 129.6 (d, CH, J_{C-P}= 1.9 Hz), 128.8 (CH), 128.4 (CH), 116.5 (CH), 52.5 (d, CH₂, J_{C-P}= 3.9 Hz), 52.4 (d, CH₂, J_{C-P}= 3.3 Hz), 21.5 (CH₃), 20.6 (CH₃), 19.4 (CH₃).

**Anal.** Ber. für C₅₂H₄₉Cl₂N₂PRu: C: 69.02, H: 5.46, N: 3.10. Gef.: C: 69.39, H: 5.61, N: 3.19.

Für die Röntgenkristallstrukturanalyse geeignete Kristalle der Verbindung **3** wurden aus einer benzolischen Lösung erhalten, die mit Hexan überschichtet war. Abbildung 2 zeigt die Struktur der Verbindung. Ausgewählte Bindungslängen (Å) lauten wie folgt: Ru-C1 1.861(4), Ru-C14 2.088(4), Ru-Cl1 2.3686(10), Ru-Cl2 2.3608(10), Ru-P 2.4453(11), C1-C2 1.502(5), C1-C13 1.493(5). Ausgewählte Bindungswinkel (°): C1-Ru-C14 97.37(16), C1-Ru-Cl1 105.15(12), C1-Ru-C12 100.50(12), C12-Ru-C11 153.98(4), C14-Ru-C11 85.13(10), C14-Ru-C12 95.98(10), C1-Ru-P 96.47(12), C14-Ru-P 165.99(11), Cl1-Ru-P 89.16(4), Cl2-Ru-P 83.62(4), C2-C1-Ru 128.5(3), C13--C1-Ru 127.2(3), C2-C1-C13 104.3(3), N1-C14-Ru 120.9(3), N2-C14-Ru 132.0(3).

### Abbildung 2. Struktur der Verbindung 3.

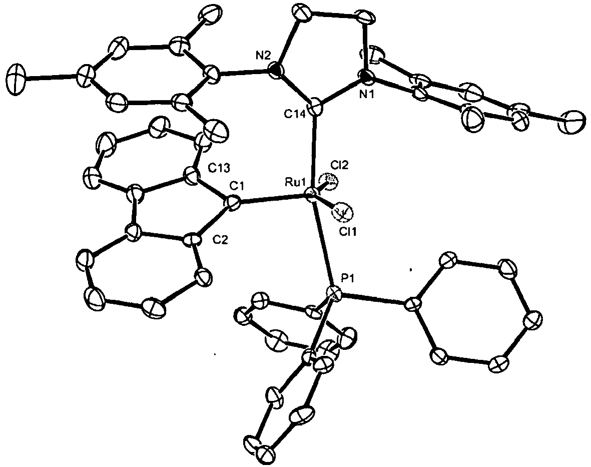

### 1.3 Dichloro(fluorenyliden)(1,3-dimesityldihydroimidazolyliden)(pyridino)ruthenium (K3)

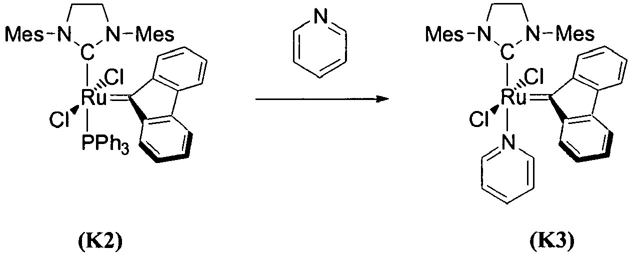

In ein Schlenkgefäß mit Magnetrührstab wurden 138 mg Dichloro(fluorenyliden)(1,3-dimesityldihydroimidazolyliden)(triphenylphosphino)ruthenium (**K2**) (98 % Reinheit; 0.15 mmol) und 0.36 ml Pyridin (4.5 mmol) unter Stickstoffatmosphäre gegeben. Die dunkelbraune Lösung wurde 30 Minuten lang bei Raumtemperatur gerührt und anschließend 10 ml trockenes Hexan hinzugefügt. Es fällt ein dunkler, gelber Niederschlag aus, von dem die Flüssigkeit abgegossen wurde. Er wurde noch 3-mal mit je 2 ml Hexan gewaschen und im Vakuum getrocknet. Reste von Pyridin wurden durch Destillation mittels Methylenchlorid entfernt.

Erhalten wurden 97 mg des Katalysators K3, entsprechend einer Ausbeute von 90 % Ausbeute.

**¹H NMR (500 MHz, CD₂Cl₂):** δ 8.08 (d, *J* = 7.6 Hz, 1H), 7.86 (d, *J* = 5.5 Hz, 1H), 7.49 (dt, *J* = 7.4 and 1.0 Hz, 2H), 7.44 (t, *J* = 7.6 Hz, 1H), 7.14 (s, 2H), 7.13 (d, *J* = 6.3 Hz, 2H), 6.94 (m, 4H), 6.08 (s, 2H), 4.08 (dd, *J* = 11.6 and 8.8 Hz, 2H), 3.81 (dd, *J* = 11.6 and 8.8 Hz, 2H), 2.83 (s, 6H), 2.35 (s, 3H), 1.93 (s, 3H), 1.89 (s, 6H).

**¹³C NMR (125 MHz, CD₂Cl₂):** δ 301.3 (C=Ru), 210.5 (N-C-N), 153.0 (CH), 148.5 (C), 139.9 (C), 139.2 (C), 137.0 (C), 136.8 (CH), 136.7 (C), 135.6 (C), 135.5 (C), 130.6 (CH), 130.4 (CH), 129.7 (CH), 129.4 (CH), 128.5 (CH), 123.9 (CH), 117.1 (CH), 53.0 (CH₂), 51.2 (CH₂), 21.2 (CH₃), 21.0 (CH₃), 20.7 (CH₃), 19.3 (CH₃).

**Anal.** Ber. für C₃₉H₃₉Cl₂N₃Ru: C: 64.90, H: 5.45, N: 5.82. Gef.: C: 65.02, H: 5.52, N: 5.78.

Für die Röntgenkristallstrukturanalyse geeignete Kristalle der Verbindung **4** wurden aus einer benzolischen Lösung erhalten, die mit Hexan überschichtet war. Abbildung 3 zeigt die Struktur der Verbindung.

Ausgewählte Bindungslängen (Å) lauten wie folgt: Ru-C1 1.860(2), Ru-C14 2.068(2), Ru-C11 2.3587(6), Ru-Cl2 2.3635(6), Ru-N3 2.144(2), C1-C2 1.487(3), C1-C13 1.493(3). Ausgewählte Bindungswinkel (°): C1-Ru-C14 99.41(10), C1-Ru-C11 101.97(7), C1-Ru-C12 97.78(7), C12-Ru-C11 158.52(3), C14-Ru-C11 85.58(6), C14-Ru-C12 99.50(6), C1-Ru-N3 92.70(9), C14-Ru-N3 166.75(9), C11-Ru-N3 86.65(6), C12-Ru-N3 84.06(6), C2-C1-Ru 127.59(17), C13-C1-Ru 126.94(18), C2-C1-C13 104.8(2), N1-C14-Ru 118.82(18), N2-C14-Ru 131.59(18).

### Abbildung 3. Struktur der Verbindung 4.

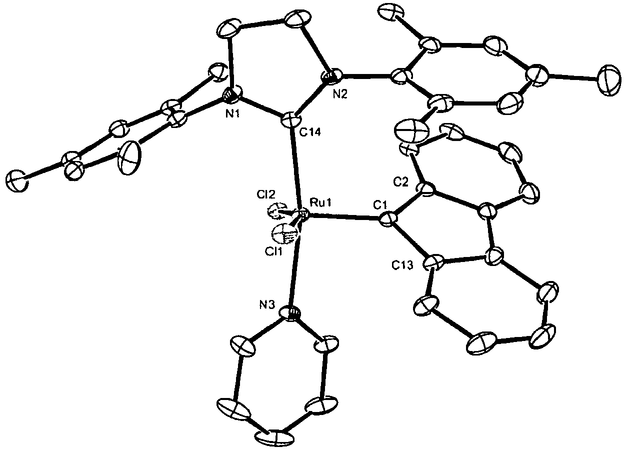

### 1.4 Mischung aus Dichloro(fluorenyliden)(1,3-dimesityldihydroimidazolyliden)(pyridino)-ruthenium (K3) und Fluorenylidentriphenylphosphazin ("K3+P1")

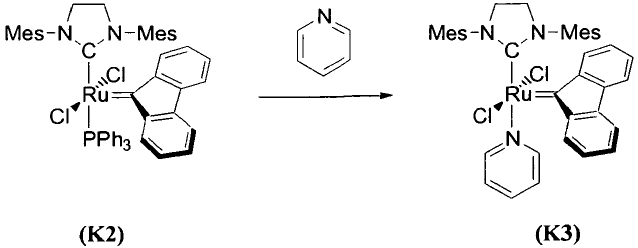

In ein Schlenkgefäß mit Magnetrührstab wurden 338 mg einer Mischung aus Dichloro(fluorenyliden)(1,3-dimesityldihydroimidazolyliden)(triphenylphosphino)ruthenium und Fluorenylidentriphenylphosphazin **(K2 + P1)** (65 % Reinheit; 0.24 mmol) sowie 0.97 ml Pyridin (12 mmol) unter einer Stickstoffatmosphäre gegeben. Die erhaltene, braune Suspension wurde 30 Minuten lang bei Raumtemperatur gerührt und anschließend 20 ml trockenes Hexan zugegeben. Vom gelb-braunen Niederschlag wurde abdekantiert und anschließend mit 3 x 2 ml Hexan nachgewaschen. Nach Trocknung unter vermindertem Druck wurden 242 mg der Mischung **K3+P1** (73 % Ausbeute) erhalten. Gemäß ¹H NMR Spektrum,* beträgt das Molverhältnis von **K3:P1** = 0.69, dies entspricht einem Gehalt an K3 von 52 %.

### 1.5 Dichloro(fluorenyliden)(1,3-dimesityldihydroimidazolyliden)(3-brompyridino) ruthenium (K4)

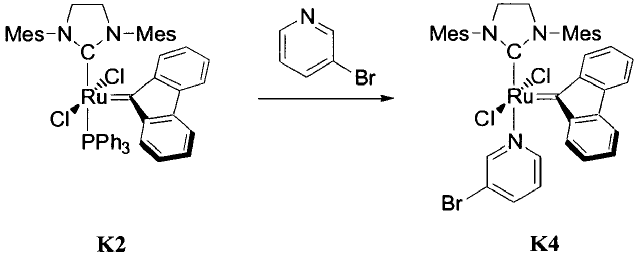

Mit der gleichen Vorgehensweise wie unter **Paragraph 1.3** beschrieben, wurde ausgehend von 0.37 ml 3-Brompyridin (3.75 mmol) Dichloro(fluorenyliden)(1,3-dimesityldihydroimidazolyliden)(3-brompyridino) ruthenium (K4) als orange-braune Produkt in einer Ausbeute von 111 mg (92 %) erhalten.

**¹H NMR (500 MHz, CD₂Cl₂):** δ 8.27 (d, *J* = 2.1 Hz, 1H), 8.05 (d, *J* = 7.5 Hz, 2H), 7.59 (dm, *J* = 8.2 Hz, 1H), 7.52 (dd, *J* = 5.3 and 1.2 Hz, 1H), 7.50 (dt, *J* = 7.3 and 1.0 Hz, 6H), 7.14 (s, 2H), 7.13 (d, *J* = 7.7 Hz, 2H), 6.95 (dt, *J =* 7.5 and 1.1 Hz, 2H), 6.76 (dd, *J =* 8.0 and 5.6 Hz, 1H), 6.08 (s, 2H), 4.09 (dd, *J* = 11.4 and 8.8 Hz, 2H), 3.82 (dd, *J* = 11.4 and 8.8 Hz, 2H), 2.81 (s, 6H), 2.36 (s, 3H), 1.93 (s, 3H), 1.88 (s, 6H).

**¹³C NMR (125 MHz, CD₂Cl₂):** δ 302.0 (C=Ru), 209.5 (N-C-N), 153.1 (CH), 152.0 (CH), 148.4 (C), 140.1 (C), 139.5 (CH), 139.3 (C), 139.1 (C), 137.0 (C), 136.7 (C), 135.5 (C), 135.3 (C), 130.7 (CH), 130.4 (CH), 129.7 (CH), 129.4 (CH), 128.6 (CH), 124.8 (CH), 119.5 (C), 117.2 (CH), 53.1 (CH₂), 51.1 (CH₂), 21.3 (CH₃), 21.0 (CH₃), 20.6 (CH₃), 19.3 (CH₃).

**Anal.** Ber. für C₃₉H₃₈BrCl₂N₃Ru: C: 58.51, H: 4.78, N: 5.25. Gef.: C: 58.62, H: 4.82, N: 5.18.

Für die Röntgenkristallstrukturanalyse geeignete Kristalle des Katalysators K4 wurden aus einer benzolischen Lösung erhalten, die mit Hexan überschichtet war. Abbildung 4 zeigt die Struktur der Verbindung. Ausgewählte Bindungslängen (Å) lauten wie folgt: Ru-C1 1.8570(16), Ru-C14 2.0510(16), Ru-Cl1 2.3681(4), Ru-Cl2 2.3678(4), Ru-N3 2.1538(14), C1-C2 1.496(2), C1-C13 1.501(2). Ausgewählte Bindungswinkel (°): C1-Ru-C14 99.68(7), C1-Ru-C11 102.71(5), C1-Ru-C12 96.91(5), C12-Ru-C11 158.268(16), C14-Ru-C11 85.63(5), C14-Ru-C12 100.29(5), C1-Ru-N3 93.85(6), C14-Ru-N3 165.25(6), Cl1-Ru-N3 85.68(4), C12-Ru-N3 83.76(4), C2-C1-Ru 128.59(12), Cl3-C1-Ru 126.73(12), C2-C1-C13 104.05(13), N1-C14-Ru 117.10(12), N2-C14-Ru 134.76(12).

### Abbildung 4. Struktur der Verbindung 5.

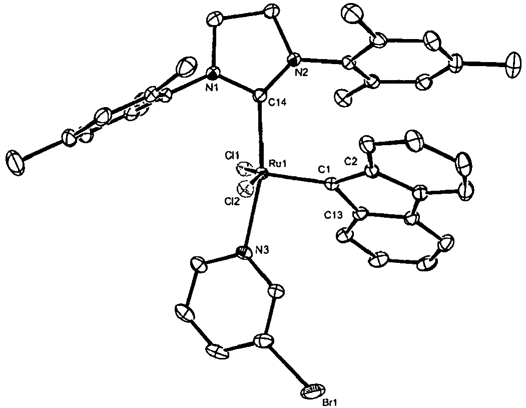

### 1.6 Mischung aus Dichloro(fluorenyliden)(1,3-dimesityldihydroimidazolyliden)(3-brompyridino)ruthenium und Fluorenylidentriphenylphosphazin (K4+P1)

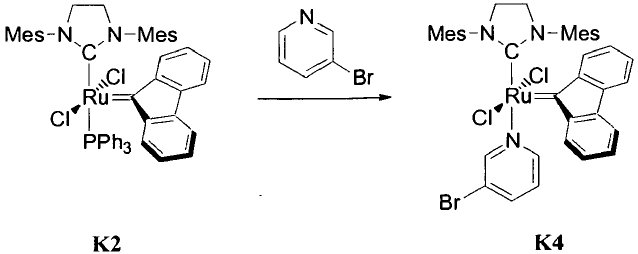

Mit der gleichen Vorgehensweise wie unter Paragraph 1.4 zuvor beschrieben wurden unter Einsatz von 0.73 ml 3-Brompyridin (7.5 mmol) als Ausgangsmaterial 300 mg der Mischung aus Dichloro(fluorenyliden)(1,3-dimesityldihydroimidazolyliden)(3-brompyridino)ruthenium und Fluorenylidentriphenylphosphazin **(K4+P1)** als orange-braunen Produkt erhalten (83 % Ausbeute). Gemäß ¹H NMR Spektrum,* beträgt das Molverhältnis von **K4:P1** = 0.78, dies entspricht einem Gehalt an K4 von 57 %.

### 1.7 Dichloro(fluorenyliden)(1,3-dimesityldihydroimidazolyliden)(3-nitropyridino)ruthenium (K5)

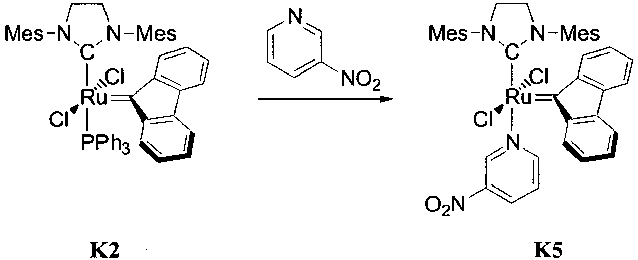

In ein Schlenkgefäß mit Magnetrührstab wurden 138 mg Dichloro(fluorenyliden)(1,3-dimesityldihydroimidazolyliden)(triphenylphosphino)ruthenium **K2** (98 % Reinheit; 0.15 mmol), 465 mg 3-Nitropyridin (3.75 mmol) und 1.0 ml Toluol unter einer Stickstoffatmosphäre gegeben. Die braune Suspension wurde bei Raumtemperatur für eine Stunde gerührt und dann 10 ml trockenes Hexan zugegeben. Vom orangeroten Niederschlag wurde abdekantiert und der Niederschlag mit 3 × 2 ml Hexan gewaschen und unter vermindertem Druck getrocknet. Reste von 3-Nitropyridin konnten entfernt werden, indem der Niederschlag zuerst in 0.2 ml Dichlormethan gelöst und anschließend durch Zugabe von 2 ml Hexan erneut ausgefällt wurde.

Erhalten wurden 103 mg des reinen Produkts Dichloro(fluorenyliden)(1,3-dimesityldihydro imidazolyliden)(3-nitropyridino)ruthenium (**K5**) (90 % Ausbeute).

**¹H NMR (500 MHz, CD₂Cl₂):** δ 9.30 (s, 1H), 8.24 (d, *J* = 7.8 Hz, 1H), 8.00 (d, *J* = 7.6 Hz, 2H), 7.74 (d, *J* = 5.2 Hz, 1H), 7.50 (t, *J* = 7.3 Hz, 2H), 7.14 (s, 2H), 7.13 (d, *J* = 8.3 Hz, 2H), 7.04 (m, 1H), 6.94 (t, *J* = 7.5 Hz, 2H), 6.08 (s, 2H), 4.11 (t, *J* = 10.1 Hz, 2H), 3.84 (t, *J* = 10.1 Hz, 2H), 2.82 (s, 6H), 2.32 (s, 3H), 1.93 (s, 3H), 1.89 (s, 6H).

**¹³C NMR (125 MHz, CD₂Cl₂):** δ 302.5 (C=Ru), 208.7 (N-C-N), 159.0 (CH), 148.4 (C), 147.9 (CH), 143.9 (C), 139.9 (C), 139.4 (C), 139.1 (C), 137.1 (C), 136.8 (C), 135.4 (C), 135.2 (C), 131.6 (CH), 131.0 (CH), 130.4 (CH), 129.8 (CH), 129.4 (CH), 128.7 (CH), 124.2 (CH), 117.3 (CH), 53.0 (CH₂), 51.2 (CH₂), 21.2 (CH₃), 21.0 (CH₃), 20.6 (CH₃), 19.4 (CH₃).

**Anal.** Ber. für C₃₉H₃₈Cl₂N₄O₂Ru: C: 61.09, H: 5.00, N: 7.31. Gef.: C: 60.74, H: 4.89, N: 7.27.

Für die Röntgenkristallstrukturanalyse geeignete Kristalle der Verbindung **6** wurden aus einer benzolischen Lösung erhalten, die mit Hexan überschichtet war. Abbildung 5 zeigt die Struktur der Verbindung. Ausgewählte Bindungslängen (Å) lauten wie folgt: Ru-C1 1.854(6), Ru-C14 2.042(6), Ru-Cl1 2.3597(14), Ru-Cl2 2.3705(15), Ru-N3 2.139(5), C1-C2 1.492(8), C1-C13 1.491(8).

Ausgewählte Bindungswinkel (°): C1-Ru-C14 100.0(3), C1-Ru-Cl1 96.15(19), C1-Ru-Cl2 102.39(19), C12-Ru-C11 159.14(6), C14-Ru-C11 100.03(16), C14-Ru-C12 86.19(17), C1-Ru-N3 96.3(2), C14-Ru-N3 163.3(2), Cl1-Ru-N3 81.95(14), Cl2-Ru-N3 86.57(14), C2-C1-Ru 127.2(4), C13-C1-Ru 128.0(5), C2-C1-C13 104.2(5), N1-C14-Ru 116.2(5), N2-C14-Ru 134.2(4).

### Abbildung 5. Struktur der Verbindung 6.

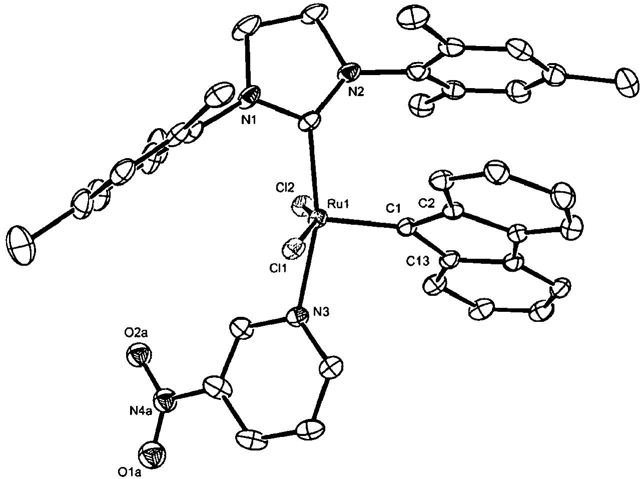

### 1.8 Mischung aus Dichloro(fluorenyliden)(1,3-dimesityldihydroimidazolyliden)(3-nitropyridino)ruthenium und Fluorenylidentriphenylphosphazin (K5+P1)

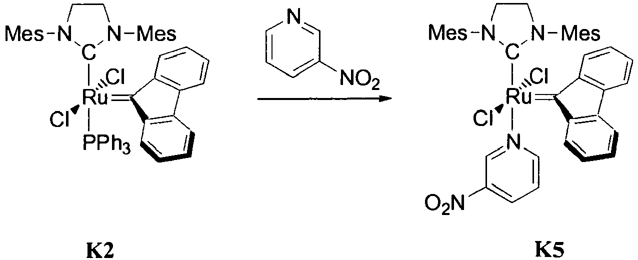

In ein Schlenkgefäß mit Magnetrührstab wurden 169 mg einer Mischung aus Dichloro(fluorenyliden)(1,3-dimesityldihydroimidazolyliden)(triphenylphosphino)ruthenium und Fluorenylidentriphenylphosphazin **("K2+P1")** (65 % Reinheit; 0.12 mmol) sowie 372 mg 3-Nitropyridin (3 mmol) und 0.8 ml Toluol unter einer Stickstoffatmosphäre gegeben. Die braune Suspension wurde bei Raumtemperatur für eine Stunde gerührt und dann 8 ml trockenes Hexan hinzugegeben. Vom rot-braunen Niederschlag wurde abdekantiert und der Niederschlag mit 3 × 1 ml Hexan gewaschen und unter vermindertem Druck getrocknet.

Erhalten wurden 139 mg der Mischung aus Dichloro(fluorenyliden)(1,3-dimesityldihydro imidazolyliden)(3-nitropyridino)ruthenium und Fluorenylidentriphenylphosphazin **(K5+P1)** (82 % Ausbeute). Gemäß ¹H NMR Spektrum,* beträgt das Molverhältnis von K5:P1 = 0.73, dies entspricht einem Gehalt an **K5** von 55 %.

### Erläuterungen zu allen Kennzeichnungen "*":

* Für die Bestimmung des Mischungsverhältnisses wurden jeweils folgende ¹H NMR Signale herangezogen (300 MHz, CD₂Cl₂): RuCl₂(PPh₃)₃ (18H bei 7.01 ppm), **1** (2H bei 6.40 ppm), Phosphazin **2** (2H bei 6.33 ppm), 3 (2H bei 5.86 ppm), **4** (2H bei 6.08 ppm), **5** (2H bei 6.08 ppm), **6** (2H bei 6.08 ppm). Der Gehalt an 1,3-Dimesitylimidazoliniumchlorid wurde über das Verhältnis der Integrale für die Wasserstoffatome bestimmt: 4H bei 4.4 ppm gegenüber den 4H des Carbens bei 4.02 und 3.78 ppm. Nicht reagiertes Dichloro(fluorenyliden)bis(triphenylphosphino)ruthenium konnte über sein ³¹P NMR Spektrum bestimmt werden. Herangezogen wurde das Verhältnis der Integrale für die 2P-Atome bei 31.3 ppm gegenüber 1P der Verbindung 3 bei 26.0 ppm.

### METATHESE REAKTIONEN mit den erfindungsgemäßen Katalysatoren:

### A "Ring-Closing-Metathese" unter Inertgasatmosphäre

In den nachfolgenden Beispielen wird die Einsetzbarkeit der erfindungsgemäß hergestellten Katalysatoren für die Ring-Closing-Metathese von Diethylallylmalonat und Diallylmalonitril demonstriert.

Hierfür wurden in einer Glovebox ein NMR-Röhrchen mit angesetztem Young-Hahn folgendermaßen befüllt: Als Substrate dienten 24.0 mg Diethyldiallylmalonat oder 14.6 mg Diallylmalononitril (jeweils 0.1 mmol) in 0.6 ml CD₂Cl₂. Hinzu kamen 0.10 ml (1 µmol; 1 mol %) einer Katalysatorlösung (5 µmol Katalysator in 0.50 ml CD₂Cl₂) bei 23-25 °C. Die Reaktion zu den Cyclopentenderivaten wurde mittels ¹H NMR Spektroskopie verfolgt, die Mengen wurden anhand der Intergrale der Signale für die Methylenprotonen der Ausgangsmaterialien (2.61 ppm für Diethyldiallylmalonat, 2 70 ppm für Diallylmalononitril) und der Produkte (2.98 ppm für Diethyl-3-cyclopenten-1,1-dicarboxylat, 3 22 ppm für 3-Cyclopenten-1,1-dicarbonitril) bestimmt Em möglicher Überdruck durch entstandenes Ethylen wurde vorsichtig entspannt.

Die Ergebnisse sind in den nachfolgenden **Tabellen A1 und A2** dargestellt.

### A1 Ring-Closing-Metathese von Diethyldiallylmalonat unter Inertgasatmosphäre

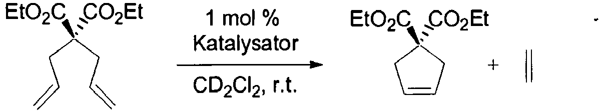

| | **Vergleich** | | **Erfindungsgemäße Katalysatoren** | | | | | | |
|---|---|---|---|---|---|---|---|---|---|
| **Beispiel** | **1** | **2** | **3** | **4** | **5** | **6** | **7** | **8** | **9** |
| **Eingesetzter Katalysator/Katalysatormischung** | | | | | | | | | |
| | **Grubbs II** | **Grubbs III** | **K2** | **K2+P1** | **K3** | **K4** | **K5** | **K3+P1** | **K4+P1** |
| **Zeit** | **UMSATZ** | | | | | | | | |
| **[min]** | **[%]** | | | | | | | | |
| 5 | 53.5 | 68.2 | 96.3 | 74.7 | 92.3 | 93.9 | 92.9 | 83.4 | 89.8 |
| 10 | 68.0 | 79.0 | 99.0 | 86.9 | 96.4 | 97.9 | 96.8 | 90.4 | 94.2 |
| 15 | 78.1 | 84.7 | 99.7 | 94.3 | 97.6 | 99.2 | 98.1 | 93.7 | 96.3 |
| 20 | 86.8 | 88.5 | - | 96.4 | 98.2 | 99.5 | 98.7 | 95.1 | 97.2 |
| 25 | 91.3 | 90.8 | - | 97.8 | 98.3 | 99.7 | 99.0 | 96.0 | 97.7 |
| 30 | 94.2 | 92.8 | - | 98.6 | 98.4 | - | 99.1 | 96.5 | 98.0 |
| 45 | 97.8 | 95.8 | - | 99.4 | 98.4 | - | 99.3 | 97.4 | 98.5 |
| 60 | 99.1 | 97.4 | - | 99.6 | 98.5 | - | 99.5 | 97.6 | 98.8 |

### A2 Ring-Closing-Metathese von Diallylmalononitril unter Inertgasatmosphäre

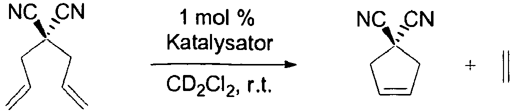

| | **Vergleich** | | **Erfindungsgemäße Katalysatoren** | | | | | | |
|---|---|---|---|---|---|---|---|---|---|
| **Beispiel** | **1** | **1** | **1** | **2** | **3** | **4** | **5** | **6** | **7** |
| | **Eingesetzter Katalysator/Katalysatormischung** | | | | | | | | |
| | **Grubbs II** | **Grubbs III** | **K2** | **K2+P1** | **K3** | **K4** | **K5** | **K3+P1** | **K4+P1** |
| **Zeit** | **UMSATZ** | | | | | | | | |
| **[min]** | **[%]** | | | | | | | | |
| 5 | 36.1 | 70.3 | 77.3 | 61.2 | 76.2 | 87.8 | 89.6 | 68.0 | 87.1 |
| 10 | 48.0 | 79.7 | 83.7 | 70.2 | 82.3 | 92.6 | 93.1 | 76.4 | 90.9 |
| 15 | 56.3 | 84.7 | 86.0 | 75.9 | 86.8 | 94.7 | 94.7 | 80.9 | 93.1 |
| 20 | 63.8 | 88.0 | 88.1 | 79.0 | 89.0 | 95.8 | 95.5 | 83.9 | 94.2 |
| 25 | 69.1 | 90.5 | 89.4 | 80.7 | 90.5 | 96.4 | 96.1 | 85.7 | 95.1 |
| 30 | 73.5 | 92.0 | 90.0 | 82.0 | 91.4 | 96.7 | 96.4 | 87.3 | 95.6 |
| 45 | 82.1 | 94.6 | 90.6 | 83.3 | 93.9 | 97.3 | 96.7 | 89.8 | 96.4 |
| 60 | 86.5 | 96.0 | 90.8 | 83.4 | 94.8 | 97.5 | 96.7 | 91.1 | 96.8 |

### A3 Ring Closing Metathese von Diethyldiallylmalonat (DEDAM) unter aeroben Bedingungen

In den nachfolgenden Versuchen wird gezeigt, dass die erfindungsgemäßen Katalysatoren unter aeroben Bedingungen die Ring Closing Metathese von DEDAM katalysieren und dass durch Zusätze von CaCl₂ die Ringschlussmetathese von DEDAM positiv beeinflusst wird.

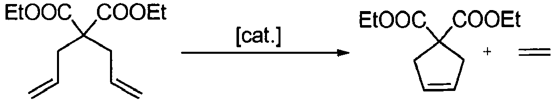

Die Ringschlussmetathese von Diethyldiallylmalonat wurde mit den erfindungsgemäßen Katalysatoren mit und ohne Zusatz von CaCl₂ ohne besondere Maßnahmen zum Ausschluss von Luft und Feuchtigkeit durchgeführt. Für die Versuche wurden jeweils 0,151 mL (0,625 mmol) DEDAM, Katalysatoren und Mengen wie in den nachfolgenden Tabellen vermerkt, 0,3 mL Chlorbenzol, 0,2mL CDCl₃ sowie 1 mg CaCl₂ verwendet.

Für die Durchführung der Versuche wurden in einer Glovebox die in den Tabellen vermerkten Katalysatoren und Mengen in ein Probengläschen abgewogen und mit einem Septum in der Glovebox verschlossen. Außerhalb der Glovebox wurden mit einer Spritze 0,3 mL nicht deuteriertem Chlorbenzol, das nicht mit Stickstoff gesättigt war, zum Katalysator gegeben und gelöst. Die Katalysatorlösung wurde an der Luft mit einer Spritze in ein NMR Röhrchen überführt. Anschließend wurde das Probengläschen mit 0,2 mL deuteriertem Chloroform (CDCl₃) an Luft nachgespült und mit einer Spritze in das NMR Röhrchen überführt. Bei den Versuchen mit CaCl₂-Zusätzen wurde noch ca. 1 mg Calciumchlorid in das NMR Röhrchen gegeben. Durch Hinzufügen von 0,151 mL (0,625 mmol) DEDAM (ALDRICH) wurde die Reaktion bei Raumtemperatur gestartet. Nach definierten Zeitabständen wurden ¹H-NMR Spektren aufgenommen, um den Reaktionsumsatz zu bestimmen.

**Tabelle A3: Ring Closing Metathese von Diethyldiallylmalonat**

| **Beispiel** | **Eingesetzter Katalysator** | **Einwaage [mg]** | **Katalysator** (unter Herausrechnen von P1) **[mol]** | **CaCl₂-Zusatz [mg]** |
|---|---|---|---|---|
| **2.01** | **K2+P1** | 15,4 | 11,05 · 10⁶ | - |
| **2.02** | **K2+P1** | 15,4 | 11,05 · 10⁻⁶ | 1 |
| **3.01** | **K3+P1** | 16,4 | 11,80 · 10⁻⁶ | - |
| **3.02** | **K3+P1** | 16,4 | 11,80 · 10⁻⁶ | 1 |
| **4.01** | **K4+P1** | 12,9 | 9,15 · 10⁻⁶ | - |
| **4.02** | **K4+P1** | 12,9 | 9,15 · 10⁻⁶ | 1 |
| **5.01** | **K5+P1** | 16,4 | 11,80 · 10⁻⁶ | - |
| **5.02** | **K5+P1** | 16,4 | 11,80 · 10⁻⁶ | 1 |

| **Versuchs-Nr.** | **2.01** | **2.02** | **3.01** | **3.02** | **4.01** | **4.02** | **5.01** | **5.02** |
|---|---|---|---|---|---|---|---|---|
| **Katalysator** | **K2+P1** | **K2+P1** | **K3+P1** | **K3+P1** | **K4+P1** | **K4+P1** | **K5+P1** | **K5+P1** |
| **CaCl₂** | - | CaCl₂ | - | CaCl₂ | - | CaCl₂ | - | CaCl₂ |
| **Zeit [min]** | **Umsätze [%**] | | | | | | | |
| **0** | 0 | 0 | 0 | 0 | 0 | 0 | 0 | 0 |
| **5** | 45,9 | 84,2 | 68,7 | 76,5 | 63,2 | 88,9 | 44,9 | 61,5 |
| **15** | 95,3 | 100 | 72,9 | 77,5 | 70,7 | 91,3 | 55,1 | 71,4 |
| **30** | 100 | 100 | 76,4 | 78 | 73,2 | 92,3 | 59,4 | 72,1 |
| **60** | | | 77,9 | 79,4 | 74,2 | 92,4 | 59,9 | 72,2 |
| **90** | | | 78,3 | 80,5 | 74,9 | 92,8 | 61,2 | 72,5 |
| **150** | | | 78,9 | 83,1 | 75,4 | 92,8 | 62,7 | 72,2 |

### B Anwendung der erfindungsgemäßen Katalysatoren für die Metathese von Nitrilkautschuk

Die nachfolgend beschriebenen Abbaureaktionen in den Versuchserien 1 bis 5 wurden unter Einsatz des Nitrilkautschuks Perbunan^{®} NT 3435 der Lanxess Deutschland GmbH durchgeführt. Dieser Nitrilkautschuk wies folgende charakteristischen Kenngrößen auf:

| | |
|---|---|
| Acrylnitrilgehalt: | 34 Gew.% |
| Mooneywert (ML 1+4 @100°C): | 35 Mooneyeinheiten |
| Restfeuchte: | 1,8 Gew.% |
| M_{w}: | 186.000 g/mol |
| Mₙ: | 60.000 g/mol |
| PDI (M_{w}/ Mₙ): | 3,1 |

Für den Metatheseabbau wurden jeweils 293 g Chlorbenzol (nachfolgend "MCB" genannt/ Firma Acros Organics) ohne weitere Reinigungsschritte verwendet. Hierin wurden 40,0 g NBR während eines Zeitraums von 10 h bei Raumtemperatur gelöst. Zu der NBR-haltigen Lösung wurde jeweils 800 mg (2 phr) 1-Hexen gegeben und zur Homogenisierung 10 min gerührt.

Die Durchführung der Metathese-Reaktion erfolgte mit den in nachfolgender Tabelle genannten Katalysatoren und jeweils einmal ohne und einmal mit 800 mg (2 phr) Calciumchlorid bei Raumtemperatur. Die Katalysatoren wurden jeweils in 10 g MCB bei Raumtemperatur unter Argon gelöst. Die Zugabe der Katalysatorlösungen zu den NBR-Lösungen in MCB erfolgte sofort nach der Herstellung der Katalysatorlösungen. Nach 30, 60, 90, 180 und 420 min wurden von den Reaktionslösungen jeweils ca. 5 ml entnommen und zur Abstoppung unmittelbar mit ca. 0,5 ml Ethylvinylether versetzt. Von diesen Lösungen wurden jeweils 2 ml entnommen und mit 3 mL DMAc verdünnt. Vor Durchführung der GPC-Analyse wurden die Lösungen jeweils mittels eines 0,2µm-Spritzenfilters aus Teflon (Chromafil PTFE 0,2 µm; Firma Macherey-Nagel) filtriert. Im Anschluss daran erfolgte die GPC-Analyse bei 80 °C über eine Vorsäule PLgel und zwei Säulen PL Resipore 3 µm, 300 x 7,5 mm der Firma Polymer Laboratories (Pumpe: Fa. Waters Model 510).

Die Kalibrierung der GPC-Säulen erfolgte mit Standards aus linearem Poly(styrol) der Firma Polymer Standards Services. Als Detektor wurde ein RI-Detektor der Firma Waters (Waters 410) verwendet. Die Analytik wurde mit einer Flussrate von 1,0 mL/min durchgeführt, wobei als Eluent DMAc (mit 0,075 mol/L LiBr) verwendet wurde. Die Auswertung der GPC-Kurven erfolgte mit Software der Firma Polymer Laboratories.

Mittels GPC-Analyse wurden folgende charakteristischen Kenngrößen sowohl für den NBR-Originalkautschuk (vor dem Abbau) als auch für die abgebauten Nitrilkautschuke bestimmt:
- M_{w} / (kg/mol):: Gewichtsmittel der Molmasse
- Mₙ / (kg/mol):: Zahlenmittel der Molmasse
- PDI:: Breite der Molmassenverteilung (M_{w}/Mₙ)

### NBR-Abbau mit Ru-Fluorenylidenkomplexen: Übersicht über die erfindungsgemäßen Beispiele und Verpleichsbeispiele

| **Versuch** | | **Katalysator/Katalysatorgemisch** | | | **CaCl₂** |
|---|---|---|---|---|---|
| | | **Typ** | **Einwaage [mg]** | **Katalysatormenge** (unter Herausrechnen von P1) **mol** | **Menge [mg]** |
| 1.01 | Vergleich | **Grubbs-II** | 20,0 | 23,6 · 10⁻⁶ | |
| 1.02 | Vergleich | **Grubbs-II** | 20,0 | 23,6 · 10⁻⁶ | 800 |
| 2.01 | Erfindungsgemäß | **3+2** | 32,8 | 23,6 · 10⁻⁶ | |
| 2.02 | Erfindungsgemäß | **3+2** | 32,8 | 23,6 · 10⁻⁶ | 800 |
| 3.01 | Erfindungsgemäß | **4+2** | 32,8 | 23,6 · 10⁻⁶ | |
| 3.02 | Erfindungsgemäß | **4+2** | 32,8 | 23,6 · 10⁻⁶ | 800 |
| 4.01 | Erfindungsgemäß | **5+2** | 33,1 | 23,6 · 10⁻⁶ | |
| 4.02 | Erfindungsgemäß | **5+2** | 33,1 | 23,6 · 10⁻⁶ | 800 |
| 5.01 | Erfindungsgemäß | **6+2** | 32,9 | 23,6 · 10⁻⁶ | |
| 5.02 | Erfindungsgemäß | **6+2** | 32,9 | 23,6 · 10⁻⁶ | 800 |

### 1.00 Vergleichsversuche mit Grubbs-II-Katalysator

### 1.01 Vergleichsversuch mit Grubbs-II-Katalysator ohne Salzzusatz

| **Katalysator** | | | **Salz** | |
|---|---|---|---|---|
| Grubbs-II | **Menge / mg** | **Menge aktive Verbindung / mol** | **Art** | **Menge / mg** |
| | 20,0 | 23,6 · 10⁻⁶ | - | - |

| **Analytische Daten** | **Reaktionszeit / min** | | | | | |
|---|---|---|---|---|---|---|
| | **0** | **30** | **60** | **90** | **180** | **420** |
| **M_{w} / (kg/mol)** | 186 | 117 | 99,9 | 84,4 | 64,9 | 53,8 |
| **Mₙ / (kg/mol)** | 60,0 | 48,9 | 41,8 | 40,2 | 33,9 | 29,3 |
| **PDI** | 3,1 | 2,4 | 2,4 | 2,1 | 1,9 | 1,8 |

### 1.02 Vergleichsversuch mit Grubbs-II-Katalysator mit Zusatz von CaCl₂

| **Katalysator** | | | **Salz** | |
|---|---|---|---|---|
| Grubbs-II | **Menge / mg** | **Menge aktive Verbindung / mol** | **Art** | **Menge / mg** |
| | 20,0 | 23,6 · 10⁻⁶ | CaCl₂ | 800 |

| **Analytische Daten** | **Reaktionszeit / min** | | | | | |
|---|---|---|---|---|---|---|
| | **0** | **30** | **60** | **90** | **180** | **420** |
| **M_{w} / (kg/mol)** | 186 | 84,4 | 61,8 | 44,2 | 25,2 | 16,8 |
| **Mₙ / (kg/mol)** | 60,0 | 39,9 | 31,4 | 25,2 | 14,6 | 10,8 |
| **PDI** | 3,1 | 2,2 | 2,0 | 1,8 | 1,7 | 1,6 |

### 2.00 Erfindungsgemäße Versuche unter Verwendung der Mischung K2+P1

### 2.01 Erfindungsgemäßer Versuch mit der Mischung K2 + P1 ohne Salzzusatz

| **Katalysator** | | | **Salz** | |
|---|---|---|---|---|
| **K2+P1** | **Menge / mg** | **Menge aktive Verbindung / mol** | **Art** | **Menge / mg** |
| | 32,8 | 23,6·10⁻⁶ | - | - |

| **Analytische Daten** | **Reaktionszeit / min** | | | | | |
|---|---|---|---|---|---|---|
| | **0** | **30** | **60** | **90** | **180** | **420** |
| **M_{w} / (kg/mol)** | 186 | 67,8 | 61,8 | 63,7 | 63,7 | 61,1 |
| **Mₙ / (kg/mol)** | 60,0 | 32,8 | 30,7 | 31,5 | 32,3 | 31,3 |
| **PDI** | 3,1 | 2,1 | 2,0 | 2,0 | 1,9 | 1,9 |

### 2.02 Erfindungsgemäßer Versuch mit der Mischung K2+P1 mit CaCl₂ Zusatz

| **Katalysator** | | | **Salz** | |
|---|---|---|---|---|
| **K2+P1** | **Menge / mg** | **Menge aktive Verbindung / mol** | **Art** | **Menge / mg** |
| | 32,8 | 23,6 · 10⁻⁶ | CaCl₂ | 800 |

| **Analytische Daten** | **Reaktionszeit / min** | | | | | |
|---|---|---|---|---|---|---|
| | **0** | **30** | **60** | **90** | **180** | **420** |
| **M_{w} / (kg/mol)** | 186 | 47,5 | 42,4 | 37,2 | 36,7 | 37,1 |
| **Mₙ / (kg/mol)** | 60,0 | 24,0 | 20,4 | 17,7 | 18,9 | 18,6 |
| **PDI** | 3,1 | 2,0 | 2,0 | 2,1 | 1,9 | 1,9 |

### 3.00 Erfindungsgemäße Versuche unter Verwendung der Mischung K3+P1

### 3.01 Erfindungsgemäßer Versuch mit der Mischung K3+P1 ohne Salzzusatz

| **Katalysator** | | | **Salz** | |
|---|---|---|---|---|
| **K3+P1** | **Menge / mg** | **Menge aktive Verbindung / mol** | **Art** | **Menge / mg** |
| | 32,8 | 23,6 · 10⁻⁶ | - | - |

| **Analytische Daten** | **Reaktionszeit / min** | | | | | |
|---|---|---|---|---|---|---|
| | **0** | **30** | **60** | **90** | **180** | **420** |
| **M_{w} / (kg/mol)** | 186 | 55,3 | 63,8 | 62,5 | 58,9 | 59,1 |
| **Mₙ / (kg/mol)** | 60,0 | 25,1 | 27,8 | 27,1 | 24,6 | 25,4 |
| **PDI** | 3,1 | 2,2 | 2,3 | 2,3 | 2,4 | 2,3 |

### 3.02 Erfindungsgemäßer Versuch mit der Mischung K3+P1 mit Zusatz von CaCl₂

| **Katalysator** | | | **Salz** | |
|---|---|---|---|---|
| **K3+P1** | **Menge / mg** | **Menge aktive Verbindung / mol** | **Art** | **Menge / mg** |
| | 32,8 | 23,6 · 10⁻⁶ | CaCl₂ | 800 |

| **Analytische Daten** | **Reaktionszeit / min** | | | | | |
|---|---|---|---|---|---|---|
| | **0** | **30** | **60** | **90** | **180** | **420** |
| **M_{w} / (kg/mol)** | 186 | 37,7 | 33,4 | 29,5 | 25,7 | 23,2 |
| **Mₙ / (kg/mol)** | 60,0 | 20,0 | 17,6 | 16,5 | 13,0 | 11,3 |
| **PDI** | 3,1 | 1,9 | 1,9 | 1,8 | 2,0 | 2,0 |

### 4.00 Erfindungsgemäße Versuche unter Verwendung der Mischung K4+P1

### 4.01 Erfindungsgemäßer Versuch mit der Mischung K4+P1 ohne Salzzusatz

| **Katalysator** | | | **Salz** | |
|---|---|---|---|---|
| **K4+P1** | **Menge / mg** | **Menge aktive Verbindung / mol** | **Art** | **Menge / mg** |
| | 33,1 | 23,6 · 10⁻⁶ | - | - |

| **Analytische Daten** | **Reaktionszeit / min** | | | | | |
|---|---|---|---|---|---|---|
| | **0** | **30** | **60** | **90** | **180** | **420** |
| **M_{w} / (kg/mol)** | 186 | 78,1 | 77,2 | 77,6 | 81,1 | 76,9 |
| **Mₙ / (kg/mol)** | 60,0 | 25,4 | 25,7 | 26,1 | 27,6 | 27,8 |
| **PDI** | 3,1 | 3,0 | 3,0 | 2,9 | 2,9 | 2,8 |

### 4.02 Erfindungsgemäßer Versuch mit der Mischung K4+P1 mit Zusatz von CaCl₂

| **Katalysator** | | | **Salz** | |
|---|---|---|---|---|
| **K4+P1** | Menge **/ mg** | **Menge aktive Verbindung / mol** | **Art** | **Menge / mg** |
| | 33,1 | 23,6 · 10⁻⁶ | CaCl₂ | 800 |

| **Analytische Daten** | **Reaktionszeit / min** | | | | | |
|---|---|---|---|---|---|---|
| | **0** | **30** | **60** | **90** | **180** | **420** |
| **M_{w} / (kg/mol)** | 186 | 64,2 | 65,1 | 60,0 | 59,3 | 53,8 |
| **Mₙ / (kg/mol)** | 60,0 | 20,6 | 21,2 | 21,0 | 21,6 | 17,9 |
| **PDI** | 3,1 | 3,1 | 3,1 | 2,9 | 2,8 | 3,0 |

### 5.00 Erfindungsgemäße Versuche unter Verwendung der Mischung K5+P1

### 5.01 Erfindungsgemäßer Versuch unter Verwendung der Mischung K5+P1 ohne Salzusatz

| **Katalysator** | | | **Salz** | |
|---|---|---|---|---|
| **K5+P1** | **Menge / mg** | **Menge aktive Verbindung / mol** | **Art** | **Menge / mg** |
| | 32,9 | 23,6·10⁻⁶ | - | - |

| **Analytische Daten** | **Reaktionszeit / min** | | | | | |
|---|---|---|---|---|---|---|
| | **0** | **30** | **60** | **90** | **180** | **420** |
| **M_{w} / (kg/mol)** | 186 | 69,5 | 75,8 | 73,6 | 67,0 | 66,9 |
| **Mₙ / (kg/mol)** | 60,0 | 31,3 | 33,5 | 31,7 | 26,5 | 28,2 |
| **PDI** | 3,1 | 2,2 | 2,3 | 2,3 | 2,5 | 2,4 |

### 5.02 Erfindungsgemäßer Versuch mit der Mischung K5+P1 mit Zusatz von CaCl₂

| **Katalysator** | | | **Salz** | |
|---|---|---|---|---|
| **K5+P1** | **Menge / mg** | **Menge aktive Verbindung / mol** | **Art** | **Menge / mg** |
| | 32,9 | 23,6 . 10⁻⁶ | CaCl₂ | 800 |

| **Analytische Daten** | **Reaktionszeit / min** | | | | | |
|---|---|---|---|---|---|---|
| | **0** | **30** | **60** | **90** | **180** | **420** |
| **M_{w} / (kg/mol)** | 186 | 39,2 | 33,0 | 29,3 | 24,3 | 21,9 |
| **Mₙ / (kg/mol)** | 60,0 | 20,1 | 17,7 | 15,4 | 12,2 | 11,3 |
| **PDI** | 3,1 | 1,9 | 1,9 | 1,9 | 2,0 | 1,9 |

## Patentansprüche

1. Katalysatoren mit der allgemeinen Formel (IIa), 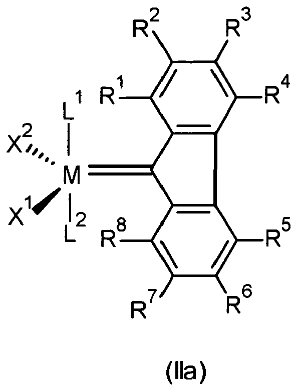 worin
M Ruthenium oder Osmium ist,
X¹ und X² gleich oder verschieden sind und zwei Liganden, bevorzugt anionische Liganden, darstellen,
L¹ und L² gleiche oder verschiedene Liganden, bevorzugt neutrale Elektronen-Donoren darstellen, wobei L² alternativ auch mit dem Rest R⁸ verbrückt sein kann,
R¹-R⁸ gleich oder verschieden sind und für Wasserstoff, Halogen, Hydroxyl, Aldehyd, Keto, Thiol, CF₃, Nitro, Nitroso, Cyano, Thiocyano, Isocyanato, Carbodiimid, Carbamat, Thiocarbamat, Dithiocarbamat, Amino, Amido, Imino, Silyl, Sulfonat (-SO₃⁻), -OSO₃⁻, -PO₃⁻ oder OPO₃- bedeuten oder für Alkyl-, Cycloalkyl-, Alkenyl-, Alkinyl-, Aryl-, Carboxylat-, Alkoxy-, Alkenyloxy-, Alkinyloxy-, Aryloxy-, Alkoxycarbonyl-, Alkylamino-, Alkylthio-, Arylthio-, Alkylsulfonyl-, Alkylsulfinyl, Dialkylamino-, Alkylsilyl oder Alkoxysilyl stehen, wobei diese Reste alle jeweils optional durch ein oder mehrere Alkyl-, Halogen-, Alkoxy-, Aryl- oder Heteroaryl-Reste substituiert sein können, oder alternativ jeweils zwei direkt benachbarte Reste aus der Gruppe von R¹-R⁸ unter Einschluss der Ringkohlenstoff-Atome, an die sie gebunden sind, durch Verbrückung eine cyclische Gruppe, bevorzugt ein aromatisches System, ausbilden, oder alternativ R⁸ gegebenenfalls mit einem anderen Liganden des Ruthenium- oder Osmium-Carben-Komplexkatalysators verbrückt ist.

2. Katalysatoren gemäß Anspruch 1, wobei in der allgemeinen Formel (IIa)
R¹-R⁸ gleich oder verschieden sind und Wasserstoff, Halogen, Hydroxyl, Aldehyd, Keto, Thiol, CF₃, Nitro, Nitroso, Cyano, Thiocyano, Isocyanato, Carbodiimid, Carbamat, Thiocarbamat, Dithiocarbamat, Amino, Amido, Imino, Silyl, Sulfonat (-SO₃⁻), - OSO₃⁻, -PO₃⁻ oder OPO₃⁻ oder stehen für Allyl, bevorzugt C₁-C₂₀-Alkyl, insbesondere C₁-C₆-Akyl, Cycloalkyl, bevorzugt C₃-C₂₀-Cycloalkyl, insbesondere C₃-C₈-Cycloalkyl, Alkenyl, bevorzugt C₂-C₂₀-Alkenyl, Alkinyl, bevorzugt C₂-C₂₀-Alkinyl, Aryl, bevorzugt C₆-C₂₄-Aryl, inbesondere Phenyl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkinyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Akylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulfonyl, Alkylsulfinyl, bevorzugt C₁-C₂₀-Alkylsulfinyl, Dialkylamino-, bevorzugt Di(C₁-C₂₀-alkyl)amino, Alkylsilyl, bevorzugt C₁-C₂₀-Alkylsilyl, oder Alkoxysilyl, bevorzugt C₁-C₂₀- Alkoxysilyl-Reste darstellen, wobei diese Reste alle jeweils optional durch ein oder mehrere Alkyl-, Halogen-, Alkoxy-, Aryl- oder Heteroaryl-Reste substituiert sein können, oder alternativ auch jeweils zwei direkt benachbarte Reste aus der Gruppe von R¹-R⁸ unter Einschluss der Ringkohlenstoff-Atome, an die sie gebunden sind, durch Verbrückung eine cyclische Gruppe, bevorzugt ein aromatisches System, ausbilden können, oder alternativ R⁸ gegebenenfalls mit einem anderen Liganden des Ruthenium- oder Osmium-Carben-Komplexkatalysators verbrückt ist.

3. Katalysatoren gemäß Anspruch 1, wobei X¹ und X² gleich oder verschieden sind und Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀- Alkylsulfonyl oder C₁-C₂₀-Alkylsulfinyl-Reste bedeuten.

4. Katalysatoren gemäß Anspruch 1, wobei X¹ und X² gleich oder verschieden sind und Halogen, insbesondere Fluor, Chlor, Brom oder Jod, Benzoat, C₁-C₅-Carboxylat, C₁-C₅-Alkyl, Phenoxy, C₁-C₅-Atkoxy, C₁-C₅-Alkylthiol, C₆-C₂₄-Arylthiol, C₆-C₂₄-Aryl oder C₁-C₅-Alkylsulfonat bedeuten.

5. Katalysatoren gemäß Anspruch 1, wobei X¹ und X² identisch sind und Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat) bedeuten.

6. Katalysatoren gemäß Anspruch 1, wobei die beiden Liganden L¹ und L² unabhängig voneinander einen Phosphin-, sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Thioether- oder einen Imidazolidin("Im")-Liganden oder einen stickstoffhaltigen Liganden ausgewählt aus der Gruppe bestehend aus Pyridin, einem Picolin (α-, β-, und γ-Picolin), Lutidin (2,3-, 2,4-, 2,5-, 2,6-, 3,4- und 3,5-Lutidin), Collidin (2,4,6-Trimethylpyridin), Trifluormethylpyridin, Phenylpyridin, 4-(Dimethylamino)pyridin, Chlorpyridin, (2-, 3- und 4-Chlorpyridin), Brompyridin (2-, 3- und 4-Brompyridin), Nitropyridin (2-, 3- und 4-Nitropyridin), Chinolin, Pyrimidin, Pyrrol, Imidazol und Phenylimidazol bedeuten.

7. Katalysatoren gemäß Anspruch 5, wobei einer oder beide Liganden L¹ und L² für einen Imidazolidinrest (Im) mit einer Struktur der allgemeinen Formeln (XIa) oder (XIb) steht, 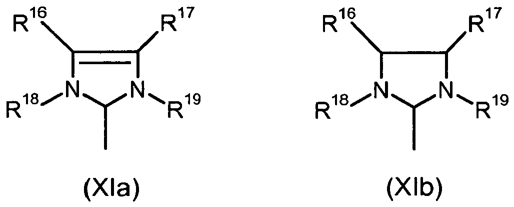 worin
R¹⁶, R¹⁷, R¹⁸, R¹⁹ gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten und die vorgenannten Reste gegebenenfalls ein- oder mehrfach substituiert sind, vorzugweise durch Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

8. Katalysatoren gemäß Anspruch 7, wobei einer oder beide Liganden L¹ und L² für einen Imidazolidinrest (Im) mit einer Struktur der allgemeinen Formeln (XIIa)-(XIIf) steht, wobei Mes jeweils 2,4,6-Trimethylphenyl oder alternativ in allen Fällen 2,6-Diisopropylphenyl bedeutet.

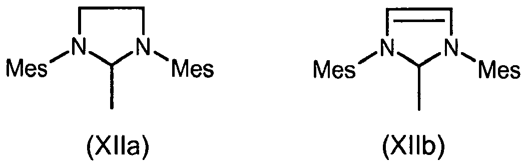

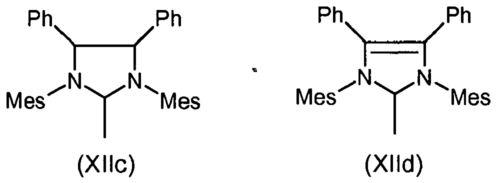

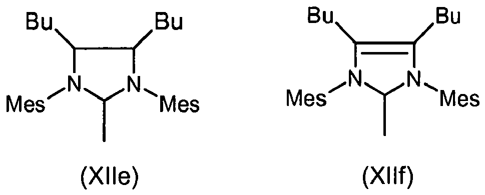

9. Katalysatoren gemäß Anspruch 1 der allgemeinen Formel (IIa), wobei
M Ruthenium darstellt,
X¹ und X² gleichzeitig Halogen bedeuten,
L¹ und L² die für die allgemeine Formel (IIa) genannten allgemeinen oder bevorzugten Bedeutungen besitzt und
R¹-R⁸ die für die allgemeine Formel (IIa) genannten allgemeinen oder bevorzugten Bedeutungen besitzt.

10. Katalysatoren gemäß Anspruch 1 der allgemeinen Formel (IIa), wobei
M Ruthenium darstellt,
X¹ und X² beide Chlor bedeuten,
L¹ einen Imidazolidin-Rest der Formeln (XIIa) bis (XIIf) darstellt,
L² einen sulfonierten Phosphin-, Phosphat-, Phosphinit-, Phosphonit-, Arsin-, Stibin-, Ether-, Amin-, Amid-, Sulfoxid-, Carboxyl-, Nitrosyl-, einen stickstoffhaltigen Liganden ausgewählt aus der Gruppe bestehend aus Pyridin, einem Picolin (α-, β-, und γ-Picolin), Lutidin (2,3-, 2,4-, 2,5-, 2,6-, 3,4- und 3,5-Lutidin), Collidin (2,4,6-Trimethylpyridin), Trifluormethylpyridin, Phenylpyridin, 4-(Dimethylamino)pyridin, Chlorpyridin, (2-, 3- und 4-Chlorpyridin), Brompyridin (2-, 3- und 4-Brompyridin), Nitropyridin (2-, 3- und 4-Nitropyridin), Chinolin, Pyrimidin, Pyrrol, Imidazol und Phenylimidazol, einen Imidazolidin-Rest der Formeln (XIIa) bis (XIIf) oder einen Phosphin-Liganden, insbesondere PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Propyl)₃, P(CHCH₃(CH₂CH₃))₃, P(Cyclopentyl)₃, P(Cyclohexyl)₃, P(Neopentyl)₃ und P(Neophenyl)₃ darstellt,
R¹-R⁸ die für die allgemeine Formel (IIa) genannten allgemeinen oder bevorzugten Bedeutungen besitzen.

11. Katalysator gemäß Anspruch 1, wobei der Rest R⁸ mit einem anderen Liganden des Komplexkatalysators verbrückt ist unter Ausbildung einer Struktur der allgemeinen Formel (XIIIa) 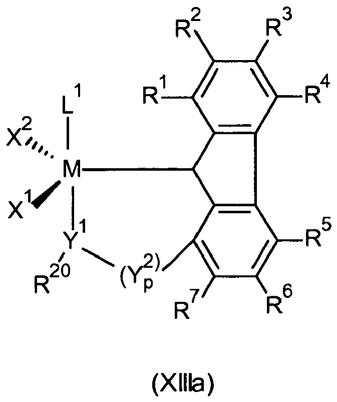 worin
Y¹ Sauerstoff, Schwefel, einen Rest N-R²¹ oder einen Rest P-R²¹ bedeutet, wobei R²¹ die nachfolgend genannten Bedeutungen besitzt,
R²⁰ und R²¹ gleich oder verschieden sind und einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellen, die alle jeweils optional durch ein oder mehrere Alkyl-, Halogen-, Alkoxy-, Aryl- oder Heteroaryl-Reste substituiert sein können,
p 0 oder 1 ist und
Y² wenn p = 1 ist, für -(CH₂)ᵣ - mit r = 1, 2 oder 3, -C(=O)-CH₂-, -C(=O)-, -N=CH-, -N(H)-C(=O)- oder aber alternativ die gesamte Struktureinheit "-Y¹ (R²⁰)- (Y²)ₚ-" für (-N(R²⁰)=CH-CH₂-), (-N(R²⁰,R²¹)=CH-CH₂-), steht und
wobei M, X¹, X², L¹, R¹-R⁸, A, m und n die gleichen Bedeutungen besitzen wie in der allgemeinen Formel (IIa).

12. Katalysatoren mit den folgenden Strukturformeln 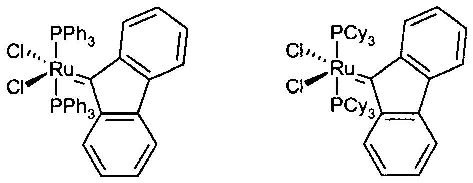 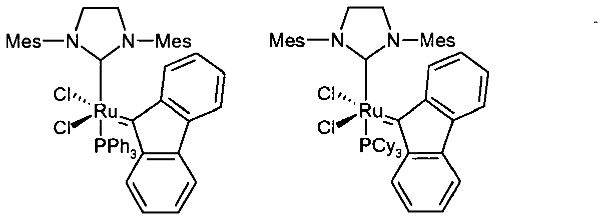 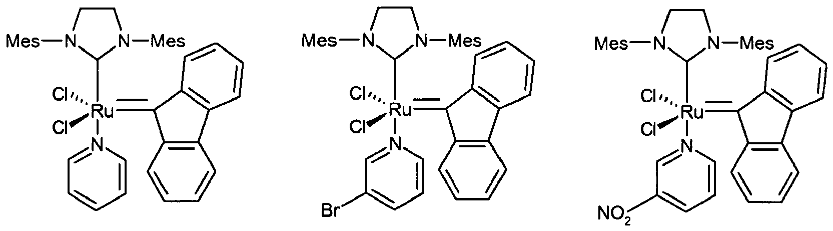 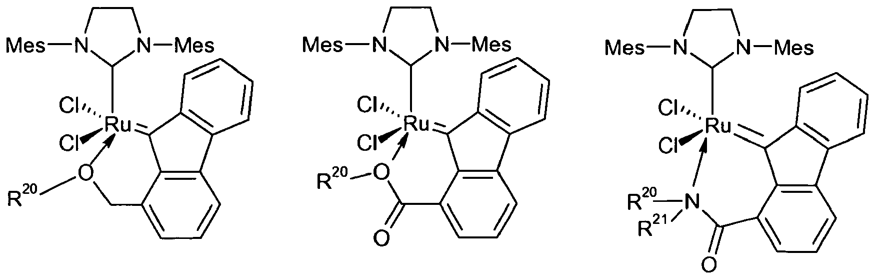 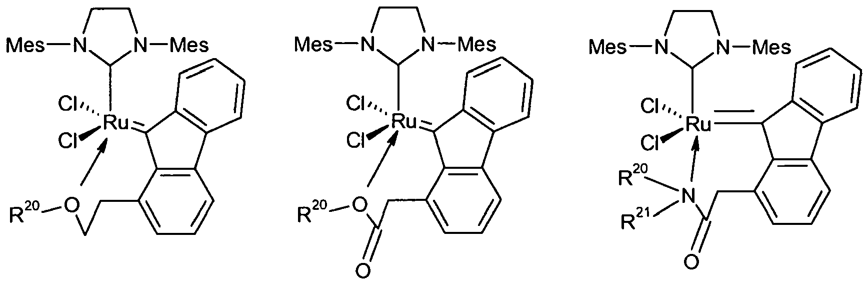 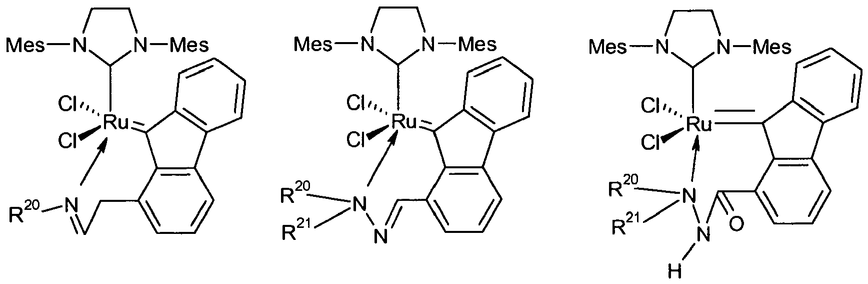 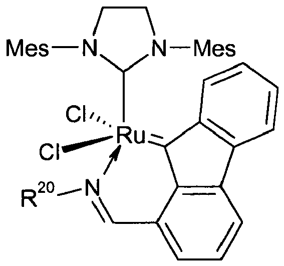 wobei Mes jeweils für 2,4,6-Trimethylphenyl steht und R²⁰ und R²¹ die in Anspruch 14 genannten Bedeutungen besitzen.

13. Verfahren zur Herstellung von Katalysatoren der allgemeinen Formel (IIa) gemäß Anspruch 1, wobei eine Katalysator-Vorläuferverbindung der allgemeinen Formel (XVII), 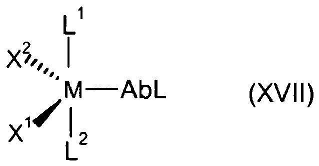 worin
M, X¹, X², L¹ und L² die gleichen allgemeinen und bevorzugten Bedeutungen wie in der allgemeinen Formel (IIa) besitzen und
AbL für "Abgangsligand" steht und die gleichen Bedeutungen besitzt wie L¹ und L² wie in der allgemeinen Formel (IIa), bevorzugt ein Phosphin-Ligand mit den für die allgemeine Formel (IIa) genannten Bedeutungen ist,
mit einer Verbindung der allgemeinen Formel (XVI) 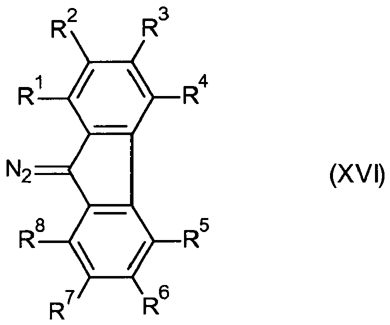 worin R¹-R⁸ die für die allgemeine Formel (IIa) genannten Bedeutungen besitzen,
bei einer Temperatur im Bereich von - +30 bis +50°C und bei einem Molverhältnis der Katalysator-Vorläuferverbindung der allgemeinen Formel (XVII) zur Verbindung der allgemeinen Formel (XVI) von 1:0,5 bis 1:5, vorzugsweise 1:1,5 bis 1:2,5 besonders bevorzugt 1:2 umgesetzt wird.

14. Verwendung der Katalysatoren gemäß einem oder mehreren der Ansprüche 1 bis 12 in Metathese-Reaktionen, insbesondere für Ringschlussmetathesen (RCM), Kreuzmetathesen (CM), Ringöffnungsmetathesen (ROM), ringöffnende Metathesepolymerisationen (ROMP), cyclische Dien Metathesepolymerisationen (ADMET), Selbstmetathesen, Umsetzung von Alkenen mit Alkinen (enin-Reaktionen), Polymerisation von Alkinen und die Olefinierung von Carbonylen.

15. Verwendung nach Anspruch 14, wobei man einen Katalysator gemäß einem oder mehreren der Ansprüche 1 bis 12 zum Molekulargewichtsabbau von Nitrilkautschuk einsetzt, indem man einen Nitrilkautschuk mit dem Katalysator in Kontakt bringt.

16. Verwendung nach Anspruch 15, wobei die Menge des Katalysators bezogen auf den eingesetzten Nitrilkautschuk 1 bis 1.000 ppm Edelmetall, bevorzugt 2 bis 500 ppm, insbesondere 5 bis 250 ppm, bezogen auf den eingesetzten Nitrilkautschuk beträgt.

17. Verwendung nach Anspruch 15 oder 16, wobei als Nitrilkautschuk ein Co- oder Terpolymer eingesetzt wird, welches Wiederholungseinheiten mindestens eines konjugierten Diens, mindestens eines α,β-ungesättigten Nitrils und gegebenenfalls einer oder mehrerer weiterer copolymerisierbarer Monomere enthält, bevorzugt Fumarsäure, Maleinsäure, Acrylsäure, Methacrylsäure, Methylacrylat, Ethylacrylat, Butylacrylat, Butylmethacrylat, 2-Ethylhexylacrylat, 2-Ethylhexylmethacrylat, Octylacrylat, Methoxyethyl(meth)acrylat, Ethoxyethyl(meth)acrylat und Methoxyethyl(meth)acrylat.

18. Verwendung nach einem oder mehreren der Ansprüche 15-17, wobei sich an den Molekulargewichtsabbau des Nitrilkautschuks durch Metathese eine Hydrierung anschließt.

## Claims

1. Catalysts having the general formula (IIa), 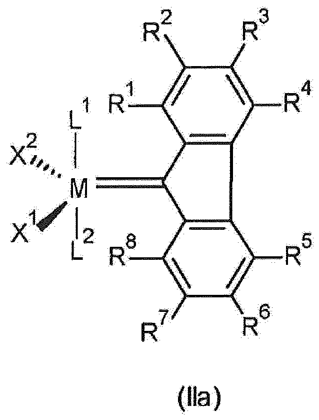 where
M is ruthenium or osmium,
X¹ and X² are identical or different and are two ligands, preferably anionic ligands,
L¹ and L² are identical or different ligands, preferably uncharged electron donors, where L² can alternatively also be bridged by the radical R⁸,
R¹-R⁸ are identical or different and are each hydrogen, halogen, hydroxyl, aldehyde, keto, thiol, CF₃, nitro, nitroso, cyano, thiocyano, isocyanato, carbodiimide, carbamate, thiocarbamate, dithiocarbamate, amino, amido, imino, silyl, sulphonate (-SO₃⁻), -OSO₃⁻, -PO₃⁻ or OPO₃⁻ or alkyl, cycloalkyl, alkenyl, alkynyl, aryl, carboxylate, alkoxy, alkenyloxy, alkynyloxy, aryloxy, alkoxycarbonyl, alkylamino, alkylthio, arylthio, alkylsulphonyl, alkylsulphinyl, dialkylamino, alkylsilyl or alkoxysilyl, where these radicals may each optionally be substituted by one or more alkyl, halogen, alkoxy, aryl or heteroaryl radicals or alternatively two directly adjacent radicals from the group R¹-R⁸ together with the ring carbons to which they are bound form, by bridging, a cyclic group, preferably an aromatic system, or alternatively R⁸ is, if appropriate, bridged to another ligand of the ruthenium- or osmium-carbene complex catalyst.

2. Catalysts according to Claim 1, wherein, in the general formula (IIa),
R¹-R⁸ are identical or different and are each hydrogen, halogen, hydroxyl, aldehyde, keto, thiol, CF₃, nitro, nitroso, cyano, thiocyano, isocyanato, carbodiimide, carbamate, thiocarbamate, dithiocarbamate, amino, amido, imino, silyl, sulphonate (-SO₃⁻), -OSO₃⁻, -PO₃⁻ or OPO₃⁻ or alkyl, preferably C₁-C₂₀-alkyl, in particular C₁-C₆-alkyl, cycloalkyl, preferably C₃-C₂₀-cycloalkyl, in particular C₃-C₈-cycloalkyl, alkenyl, preferably C₂-C₂₀-alkenyl, alkynyl, preferably C₂-C₂₀-alkynyl, aryl, preferably C₆-C₂₄-aryl, in particular phenyl, carboxylate, preferably C₁-C₂₀-_{C}arboxylate, alkoxy, preferably C₁-C₂₀-alkoxy, alkenyloxy, preferably C₂-C₂₀-alkenyloxy, alkynyloxy, preferably C₂-C₂₀-alkynyloxy, aryloxy, preferably C₆-C₂₄-aryloxy, alkoxycarbonyl, preferably C₂-C₂₀-alkoxycarbonyl, alkylamino, preferably C₁-C₃₀-alkylamino, alkylthio, preferably C₁-C₃₀-alkylthio, arylthio, preferably C₆-C₂₄-arylthio, alkylsulphonyl, preferably C₁-C₂₀-alkylsulphonyl, alkylsulphinyl, preferably C₁-C₂₀-alkylsulphinyl, dialkylamino, preferably di(C₁-C₂₀-alkyl)ainino, alkylsilyl, preferably C₁-C₂₀-alkylsilyl, or Alkoxysilyl, preferably C₁-C₂₀-alkoxysilyl, radicals, where these radicals may all optionally be substituted by one or more alkyl, halogen, alkoxy-, aryl- or heteroaryl radicals, or alternatively two directly adjacent radicals from the group of R¹-R⁸ together with the ring carbons to which they are bound may also form a cyclic group, preferably an aromatic system, by bridging or alternatively R⁸ may optionally be bridged to another ligand of the ruthenium- or osmium-carbene complex catalyst.

3. Catalysts according to Claim 1, wherein X¹ and X² are identical or different and are each hydrogen, halogen, pseudohalogen, a straight-chain or branched C₁-C₃₀-alkyl, C₆-C₂₄-aryl, C₁-C₂₀-alkoxy, C₆-C₂₄-aryloxy, C₃-C₂₀-alkyldiketonate, C₆-C₂₄-Aryldiketonate, C₁-C₂₀-carboxylate, C₁-C₂₀-alkylsulphonate, C₆-C₂₄-arylsulphonate, C₁-C₂₀-alkylthiol, C₆-C₂₄-arylthiol, C₁-C₂₀-alkylsulphonyl or C₁-C₂₀-alkylsulphinyl radical.

4. Catalysts according to Claim 1, wherein X¹ and X² are identical or different and are each halogen, in particular fluorine, chlorine, bromine or iodine, benzoate, C₁-C₅-carboxylate, C₁-C₅-alkyl, phenoxy, C₁-C₅-alkoxy, C₁-C₅-alkylthiol, C₆-C₂₄-arylthiol, C₆-C₂₄-aiyl or C₁-C₅-alkylsulphonate.

5. Catalysts according to Claim 1, wherein X¹ and X² are identical and are each halogen, in particular chlorine, CF₃COO, CH₃COO, CFH₂COO, (CH₃)₃CO, (CF₃)₂(CH₃)CO, (CF₃)(CH₃)₂CO, PhO (phenoxy), MeO (methoxy), EtO (ethoxy), tosylate (p-CH₃-C₆H₄-SO₃), mesylate (2,4,6-trimethylphenyl) or CF₃SO₃ (trifluoromethanesulphonate).

6. Catalysts according to Claim 1, wherein the two ligands L¹ and L² are each, independently of one another, a phosphine, sulphonated phosphine, phosphate, phosphinite, phosphonite, arsine, stibine, ether, amine, amide, sulphoxide, carboxyl, nitrosyl, thioether or imidazolidine ("Im") ligand or a nitrogen-containing ligand selected from the group consisting of pyridine, a picoline (α-, β-and γ-picoline), lutidine (2,3-, 2,4-, 2,5-, 2,6-, 3,4- and 3,5-lutidine), collidine (2,4,6-trimethylpyridine), trifluoromethylpyridine, phenylpyridine, 4-(dimethylamino)pyridine, chloropyridine (2-, 3- and 4-chloropyridine), bromopyridine (2-, 3- and 4-bromopyridine), nitropyridine (2-, 3- and 4-nitropyridine), quinoline, pyrimidine, pyrrole, imidazole and phenylimidazole.

7. Catalysts according to Claim 5, wherein one or both ligands L¹ and L² is/are an imidazolidine radical (Im) having a structure of the general formula (XIa) or (XIb), 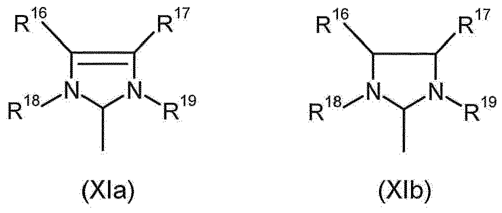 where
R¹⁶, R¹⁷, R¹⁸, R¹⁹ are identical or different and are hydrogen, straight-chain or branched C₁-C₃₀-alkyl, C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₀-aryloxy, C₂-C₂₀-alkoxycarbonyl, C₁-C₂₀-alkylthio, C₆-C₂₀-arylthio, C₁-C₂₀-alkylsulphonyl, C₁-C₂₀-alkylsulphonate, C₆-C₂₀-arylsulphonate or C₁-C₂₀-alkylsulphinyl and the abovementioned radicals may optionally be monosubstituted or polysubstituted, preferably by substituents which may in turn be substituted by one or more radicals which are preferably selected from the group consisting of halogen, in particular chlorine or bromine, C₁-C₅-alkyl, C₁-C₅-alkoxy and phenyl.

8. Catalysts according to Claim 7, wherein one or both ligands L¹ and L² is/are an imidazolidine radical (Im) having a structure of one of the general formulae (XIIa)-(XIIf), where Mes is in each case 2,4,6-trimethylphenyl or alternatively in all cases 2,6-diisopropylphenyl.

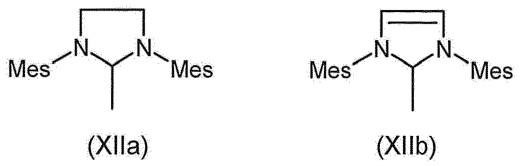

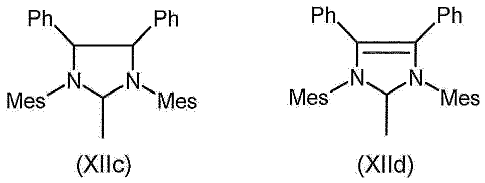

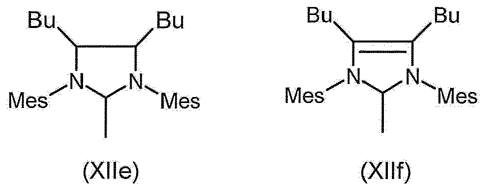

9. Catalysts according to Claim 1 of the general formula (IIa) in which
M is ruthenium,
X² and X² are both halogen,
L¹ and L² have the general or preferred meanings mentioned for the general formula (IIa), and
R¹-R⁸ have the general or preferred meanings mentioned for the general formula (IIa).

10. Catalysts according to Claim 1 of the general formula (IIa) in which
M is ruthenium,
X¹ and X² are both chlorine,
L¹ is an imidazolidine radical having one of the formulae (XIIa) to (XIIf),
L² is a sulphonated phosphine, phosphate, phosphinite, phosphonite, arsine, stibine, ether, amine, amide, sulphoxide, carboxyl, nitrosyl, a nitrogen-containing ligand selected from the group consisting of pyridine, a picoline (α-,β- and γ-picoline), lutidine (2,3-, 2,4-, 2,5-, 2,6-, 3,4- and 3,5-lutidine), collidine (2,4,6-trimethylpyridine), trifluoromethylpyridine, phenylpyridine, 4-(dimethylamino)pyridine, chloropyridine (2-, 3- and 4-chloropyridine), bromopyridine (2-, 3- and 4-bromopyridine), nitropyridine (2-, 3- and 4-nitropyridine), quinoline, pyrimidine, pyrrole, imidazole and phenylimidazole, an imidazolidine radical having one of the formulae (XIIa) to (XIIIf) or a phosphine ligand, in particular PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(isopropyl)₃, P(CHCH₃(CH₂CH₃))₃, P(cyclopentyl)₃, P(cyclohexyl)₃, P(neopentyl)₃ or P(neophenyl)₃,
R¹-R⁸ have the general or preferred meanings mentioned for the general formula (IIa).

11. Catalyst according to Claim 1, wherein the radical R⁸ is bridged to another ligand of the complex catalyst to form a structure of the general formula (XIIIa) 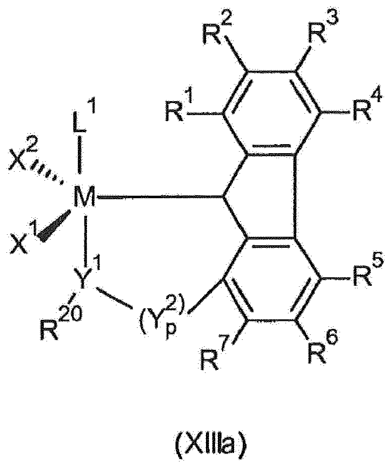 where
Y¹ is oxygen, sulphur, an N-R²¹ radical or a P-R²¹ radical, where R²¹ is as defined below,
R²⁰ and R²¹ are identical or different and are each an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical which may all optionally be substituted by one or more alkyl, halogen, alkoxy, aryl or heteroaryl radicals,
p is 0 or 1 and
Y² is, when p = 1, -(CH₂)ᵣ- where r = 1, 2 or 3, -C(=O)-CH₂-, -C(=O)-, - N=CH-, -N(H)-C(=O)- or alternatively the overall structural unit "-Y¹(R²⁰)-(Y²)ₚ-" is (-N(R²⁰)-CH-CH₂-), (-N(R²⁰,R²¹)-CH-CH₂-) and
M, X¹, X², L¹ and R¹-R⁸ have the same meanings as in the general formula (IIa).

12. Catalysts having the following structural formulae 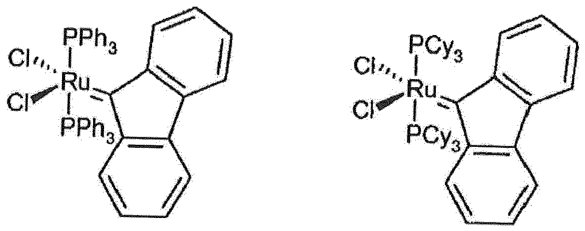 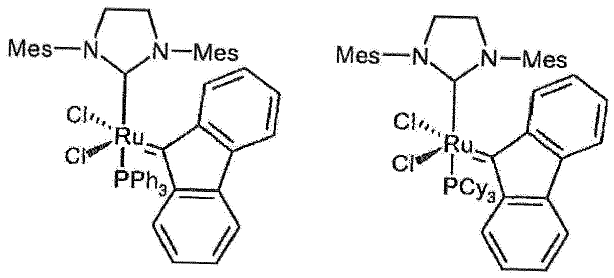 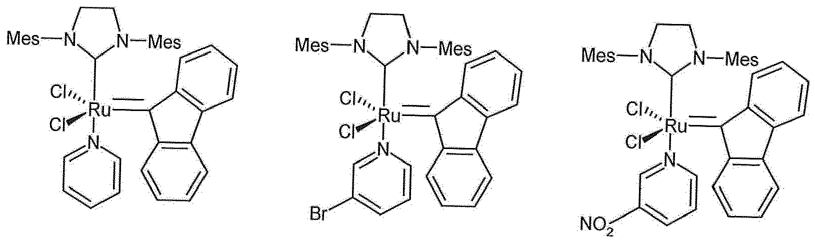 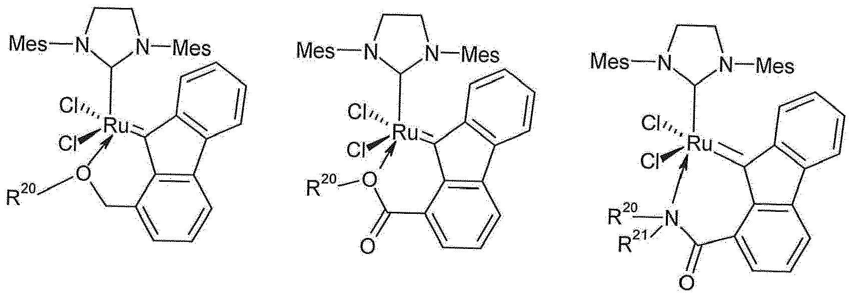 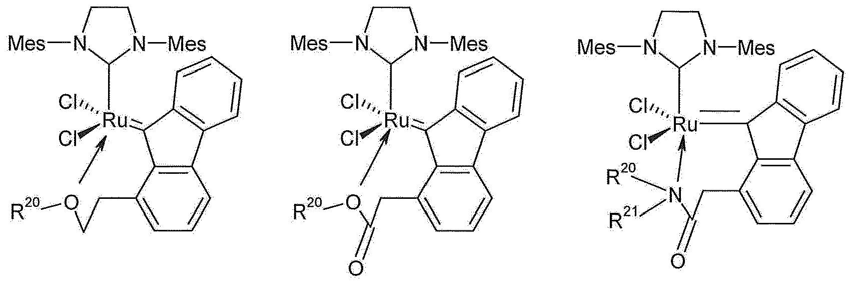 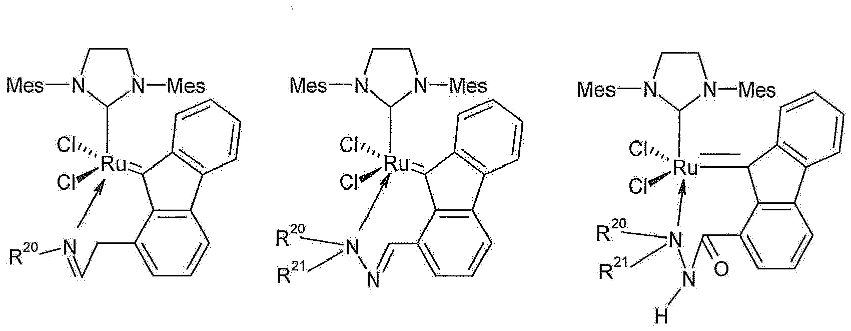 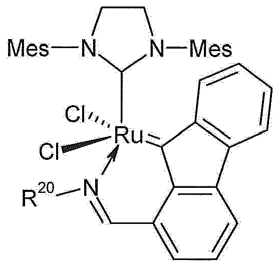 where Mes is in each case 2,4,6-trimethylphcnyl and R²⁰ and R²¹ have the meanings mentioned in Claim 11.

13. Process for preparing catalysts of the general formula (IIa) according to Claim 1, wherein a catalyst precursor compound of the general formula (XVII), 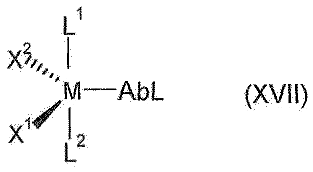 where
M, X¹, X², L¹ and L² have the same general and preferred meanings as in the general formula (IIa) and
AbL is a "leaving ligand" and has the same meanings as L¹ and L² in the general formula (IIa), preferably a phosphine ligand having one of the meanings mentioned for the general formula (IIa),
is reacted with a compound of the general formula (XVI) 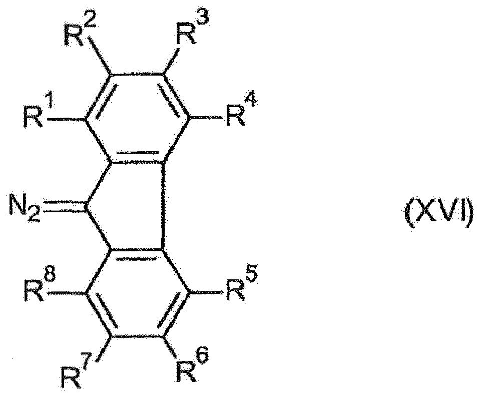 where R¹-R⁸ have the meanings mentioned for the general formula (IIa),
at a temperature in the range from +30 to +50°C and a molar ratio of the catalyst precursor compound of the general formula (XVII) to the compound of the general formula (XVI) of from 1:0.5 to 1:5, preferably from 1:1.5 to 1:2.5, particularly preferably 1:2.

14. Use of the catalysts according to one or more of Claims 1 to 12 in metathesis reactions, in particular for ring-closing metatheses (RCM), cross metatheses (CM), ring-opening metatheses (ROM), ring-opening methesis polymerizations (ROMP), cyclic diene metathesis polymerizations (ADMET), self-metatheses, reaction of alkenes with alkynes (enyne reactions), polymerizations of alkynes and the olefinization of carbonyls.

15. Use according to Claim 14, wherein a catalyst according to one or more of Claims 1 to 12 is used for decreasing the molecular weight of nitrile rubber by bringing a nitrile rubber into contact with the catalyst.

16. Use according to Claim 15, wherein the amount of catalyst based on the nitrile rubber used is from 1 to 1 000 ppm of noble metal, preferably from 2 to 500 ppm, in particular from 5 to 250 ppm.

17. Use according to Claim 15 or 16, wherein a copolymer or terpolymer containing repeating units of at least one conjugated diene, at least one α,β-unsaturated nitrile and, if appropriate, one or more further copolymerizable monomers, preferably fumaric acid, maleic acid, acrylic acid, methacrylic acid, methyl acrylate, ethyl acrylate, butyl acrylate, butyl methacrylate, 2-ethylhexyl acrylate, 2-ethylhexyl methacrylate, octyl acrylate, methoxyethyl (meth)acrylate, ethoxyethyl (meth)acrylate and methoxyethyl (meth)acrylate, is used as nitrile rubber.

18. Use according to one or more of Claims 15-17, wherein the degradation of the nitrile rubber by metathesis to reduce the molecular weight is followed by a hydrogenation.

## Revendications

1. Catalyseurs de formule générale (IIa) 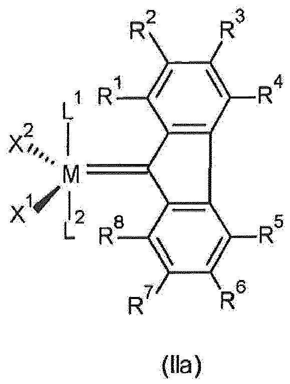 dans laquelle
M représente le ruthénium ou l'osmium,
X¹ et X² sont identiques ou différents et représentent deux ligands, de préférence des ligands anioniques,
L¹ et L² représentent des ligands identiques ou différents, de préférence des donneurs d'électrons neutres, L² pouvant en variante également être ponté avec le radical R⁸,
R¹ à R⁸ sont identiques ou différents et signifient hydrogène, halogène, hydroxyle, aldéhyde, céto, thiol, CF₃, nitro, nitroso, cyano, thiocyano, isocyanato, carbodiimide, carbamate, thiocarbamate, dithiocarbamate, amino, amido, imino, silyle, sulfonate (-SO₃⁻), -OSO₃⁻, -PO₃⁻ ou OPO₃⁻, ou représentent alkyle, cycloalkyle, alcényle, alcynyle, aryle, carboxylate, alcoxy, alcényloxy, alcynyloxy, aryloxy, alcoxycarbonyle, alkylamino, alkylthio, arylthio, alkylsulfonyle, alkylsulfinyle, dialkylamino, alkylsilyle ou alcoxysilyle, ces radicaux pouvant tous à chaque fois éventuellement être substitués par un ou plusieurs radicaux alkyle, halogène, alcoxy, aryle ou hétéroaryle, ou, en variante, deux radicaux directement voisins du groupe constitué par R¹ à R⁸ pouvant à chaque fois former un groupe cyclique par pontage en incluant les atomes de carbone de cycle auxquels ils sont reliés, de préférence un système aromatique, ou, en variante, R⁸ étant éventuellement ponté avec un autre ligand du catalyseur complexe ruthénium- ou osmium-carbène.

2. Catalyseurs selon la revendication 1, dans lesquels, dans la formule générale (IIa),
R¹ à R⁸ sont identiques ou différents et signifient hydrogène, halogène, hydroxyle, aldéhyde, céto, thiol, CF₃, nitro, nitroso, cyano, thiocyano, isocyanato, carbodiimide, carbamate, thiocarbamate, dithiocarbamate, amino, amido, imino, silyle, sulfonate (-SO₃⁻), -OSO₃⁻, -PO₃⁻ ou OPO₃⁻, ou représentent des radicaux alkyle, de préférence alkyle en C₁-C₂₀, notamment alkyle en C₁-C₆, cycloalkyle, de préférence cycloalkyle en C₃-c₂₀, notamment cycloalkyle en C₃-C₈, alcényle, de préférence alcényle en C₂-C₂₀, alcynyle, de préférence alcynyle en C₂-C₂₀, aryle, de préférence aryle en C₆-C₂₄, notamment phényle, carboxylate, de préférence carboxylate en C₁-C₂₀, alcoxy, de préférence alcoxy en C₁-C₂₀, alcényloxy, de préférence alcényloxy en C₂-C₂₀, alcynyloxy, de préférence alcynyloxy en C₂-C₂₀, aryloxy, de préférence aryloxy en C₆-C₂₄, alcoxycarbonyle, de préférence alcoxycarbonyle en C₂-C₂₀, alkylamino, de préférence alkylamino en C₁-C₃₀, alkylthio, de préférence alkylthio en C₁-C₃₀, arylthio, de préférence arylthio en C₆-C₂₄, alkylsulfonyle, de préférence alkylsulfonyle en C₁-C₂₀, alkylsulfinyle, de préférence alkylsulfinyle en C₁-C₂₀, dialkylamino, de préférence di(alkyle en C₁-C₂₀) amino, alkylsilyle, de préférence alkylsilyle en C₁-C₂₀, ou alcoxysilyle, de préférence alcoxysilyle en C₁-C₂₀, ces radicaux pouvant tous à chaque fois éventuellement être substitués par un ou plusieurs radicaux alkyle, halogène, alcoxy, aryle ou hétéroaryle, ou, en variante, deux radicaux directement voisins du groupe constitué par R¹ à R⁸ pouvant à chaque fois former un groupe cyclique par pontage en incluant les atomes de carbone de cycle auxquels ils sont reliés, de préférence un système aromatique, ou, en variante, R⁸ étant éventuellement ponté avec un autre ligand du catalyseur complexe ruthénium- ou osmium-carbène.

3. Catalyseurs selon la revendication 1, dans lesquels X¹ et X² sont identiques ou différents et signifient des radicaux hydrogène, halogène, pseudohalogène, alkyle en C₁-C₃₀ linéaire ou ramifié, aryle en C₆-C₂₄, alcoxy en C₁-C₂₀, aryloxy en C₆-C₂₄, dicétonate d'alkyle en C₃-C₂₀, dicétonate d'aryle en C₆-C₂₄, carboxylate en C₁-C₂₀, sulfonate d' alkyle en C₁-C₂₀, sulfonate d' aryle en C₆-C₂₄, alkylthiol en C₁-C₂₀, arylthiol en C₆-C₂₄, alkylsulfonyle en C₁-C₂₀ ou alkylsulfinyle, en C₁-C₂₀.

4. Catalyseurs selon la revendication 1, dans lesquels X¹ et X² sont identiques ou différents et signifient halogène, notamment fluor, chlore, brome ou iode, benzoate, carboxylate en C₁-C₅, alkyle en C₁-C₅. phénoxy, alcoxy en C₁-C₅, alkylthiol en C₁-C₅, arylthiol en C₆-C₂₄, aryle en C₆-C₂₄ ou sulfonate d'alkyle en C₁-C₅.

5. Catalyseurs selon la revendication 1, dans lesquels X¹ et X² sont identiques et signifient halogène, notamment chlore, CF₃COO, CH₃COO, CFH₂COO, (CH₃)₃CO, (CF₃)₂(CH₃)CO, (CF₃)(CH₃)₂CO, PhO (phénoxy), MeO (méthoxy), EtO (éthoxy), tosylate (p-CH₃-C₆H₄-SO₃), mésylate (2,4,6-triméthylphényle) ou CF₃SO₃ (sulfonate de trifluorométhane).

6. Catalyseurs selon la revendication 1, dans lesquels les deux ligands L¹ et L² signifient indépendamment l'un de l'autre un ligand phosphine, phosphine sulfonée, phosphate, phosphinite, phosphonite, arsine, stibine, éther, amine, amide, sulfoxyde, carboxyle, nitrosyle, thioéther ou imidazolidine (« Im ») ou un ligand azoté choisi dans le groupe constitué par pyridine, picoline (α, β et γ-picoline), luditine (2,3-, 2,4-, 2,5-, 2,6-, 3,4- et 3,5-lutidine), collidine (2,4,6-triméthylpyridine), trifluorométhylpyridine, phénylpyridine, 4-(diméthylamino)pyridine, chloropyridine, (2-, 3- et 4-chloropyridine), bromopyridine (2-, 3- et 4-bromopyridine), nitropyridine (2-, 3- et 4-nitropyridine), quinoline, pyrimidine, pyrrol, imidazole et phénylimidazole.

7. Catalyseurs selon la revendication 5, dans lesquels un ou les deux ligands L¹ et L² représentent un radical imidazolidine (Im) ayant une structure de formule générale (XIa) ou (XIb) 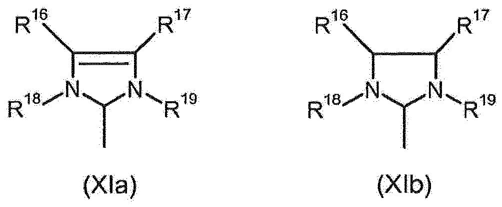 dans lesquelles
R¹⁶, R¹⁷, R¹⁸, R¹⁹ sont identiques ou différents et signifient hydrogène, alkyle en C₁-C₃₀ linéaire ou ramifié, cycloalkyle en C₃-C₂₀, alcényle en C₂-C₂₀, alcynyle en C₂-C₂₀, aryle en C₆-C₂₄, carboxylate en C₁-C₂₀, alcoxy en C₁-C₂₀, alcényloxy en C₂-C₂₀, alcynyloxy en C₂-C₂₀, aryloxy en C₆-C₂₀, alcoxycarbonyle en C₂-C₂₀, alkylthio en C₁-C₂₀, arylthio en C₆-C₂₀, alkylsulfonyle en C₁-C₂₀, sulfonate d'alkyle en C₁-C₂₀, sulfonate d' aryle en C₆-C₂₀ ou alkylsulfinyle en C₁-C₂₀, et les radicaux susmentionnés sont éventuellement substitués une ou plusieurs fois, de préférence par des substituants qui peuvent à leur tour être substitués par un ou plusieurs radicaux, de préférence choisis dans le groupe constitué par halogène, notamment chlore ou brome, alkyle en C₁-C₅, alcoxy en C₁-C₅ et phényle.

8. Catalyseurs selon la revendication 7, dans lesquels un ou les deux ligands L¹ et L² représentent un radical imidazolidine (Im) ayant une structure des formules générales (XIIa) à (XIIf), Mes signifiant à chaque fois 2,4,6-triméthylphényle ou en variante dans tous les cas 2,6-diisopropylphényle

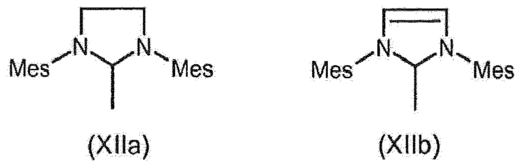

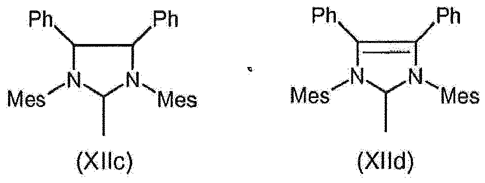

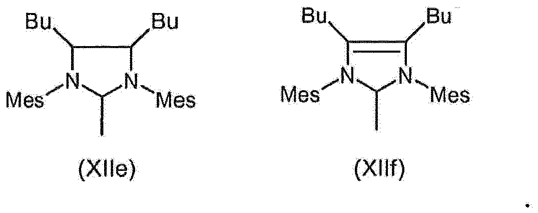

9. Catalyseurs selon la revendication 1 de formule générale (IIa), dans laquelle
M représente le ruthénium,
X¹ et X² signifient simultanément halogène,
L¹ et L² ont les significations générales ou préférées indiquées pour la formule générale (IIa), et
R¹ à R⁸ ont les significations générales ou préférées indiquées pour la formule générale (IIa).

10. Catalyseurs selon la revendication 1 de formule générale (IIa), dans laquelle
M représente le ruthénium,
X¹ et X² signifient tous les deux le chlore,
L¹ représente un radical imidazolidine des formules (XIIa) à (XIIf),
L² représente un ligand phosphine sulfonée, phosphate, phosphinite, phosphonite, arsine, stibine, éther, amine, amide, sulfoxyde, carboxyle, nitrosyle, un ligand azoté choisi dans le groupe constitué par pyridine, picoline (α, β et γ-picoline), luditine (2,3-, 2,4-, 2,5-, 2,6-, 3,4- et 3,5-lutidine), collidine (2,4,6-triméthylpyridine), trifluorométhylpyridine, phénylpyridine, 4-(diméthylamino)pyridine, chloropyridine, (2-, 3- et 4-chloropyridine), bromopyridine (2-, 3- et 4-bromopyridine), nitropyridine (2-, 3- et 4-nitropyridine), quinoline, pyrimidine, pyrrol, imidazole et phénylimidazole, un radical imidazolidine des formules (XIIa) à (XIIf) ou un ligand phosphine, notamment PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-propyle)₃, P(CHCH₃(CH₂CH₃))₃, P(cyclopentyle)₃, P(cyclohexyle)₃, P(néopentyle)₃ et P(néophényle)₃,
R¹ à R⁸ ont les significations générales ou préférées indiquées pour la formule générale (IIa).

11. Catalyseur selon la revendication 1, dans lequel le radical R⁸ est ponté avec un autre ligand du catalyseur complexe et forme une structure de formule générale (XIIIa) 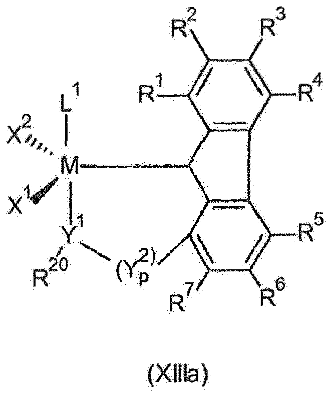 dans laquelle
Y¹ signifie l' oxygène, le soufre, un radical N-R²¹ ou un radical P-R²¹, R²¹ ayant les significations indiquées ci-après,
R²⁰ et R²¹ sont identiques ou différents et représentent un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, qui peuvent tous à chaque fois éventuellement être substitués par un ou plusieurs radicaux alkyle, halogène, alcoxy, aryle ou hétéroaryle,
p représente 0 ou 1, et
Y² lorsque p = 1, représente -(CH₂)ᵣ- avec r = 1, 2 ou 3, -C(=O)-CH₂-, -C(=O)-, -N=CH-, -N(H)-C(=O)- ou représente en variante l'ensemble de l'unité structurale « -Y¹-(R²⁰)-(Y²)ₚ- », (-N(R²⁰)=CH-CH₂-), (-N(R²⁰,R²¹)=CH-CH₂-),
M, X¹, X², L¹, R¹ à R⁸, A, m et n ayant les mêmes significations que dans la formule générale (IIa).

12. Catalyseurs ayant les formules structurales suivantes : 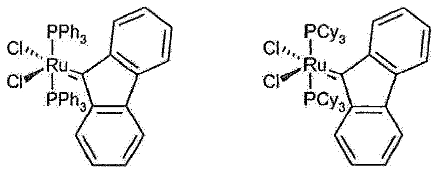 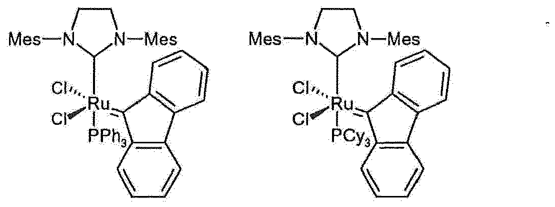 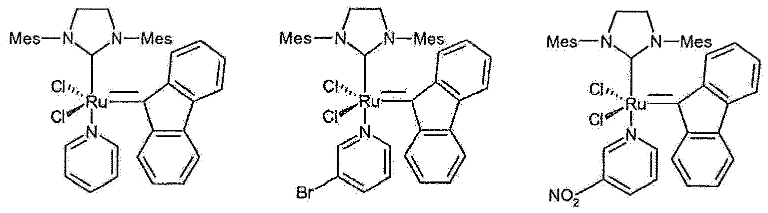 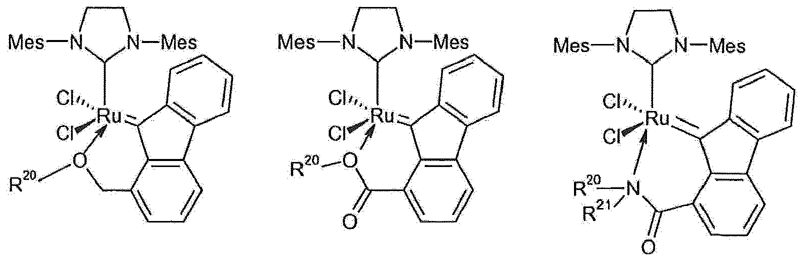 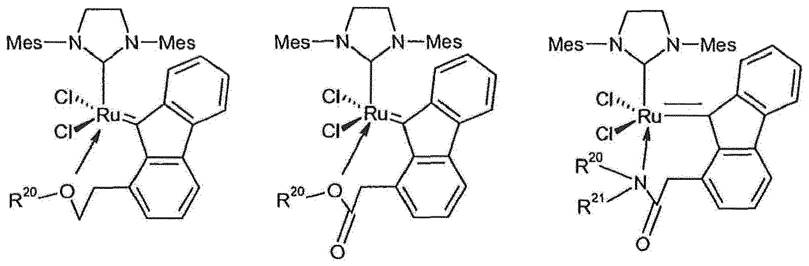 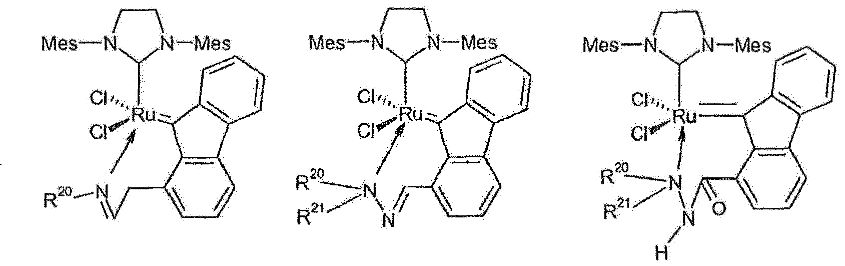 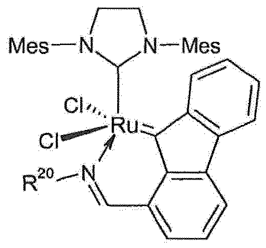 Mes représentant à chaque fois 2,4,6-triméthylphényle et R²⁰ et R²¹ ayant les significations indiquées dans la revendication 14.

13. Procédé de fabrication de catalyseurs de formule générale (IIa) selon la revendication 1, dans lequel un composé précurseur de catalyseur de formule générale (XVII) 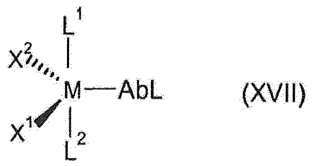 dans laquelle
M, X¹, X², L¹ et L² ont les mêmes significations générales et préférées que dans la formule générale (IIa), et
AbL signifie « ligand partant » et a les mêmes significations que L¹ et L² dans la formule générale (IIa), de préférence un ligand phosphine ayant les significations indiquées pour la formule générale (IIa),
est mis en réaction avec un composé de formule générale (XI) 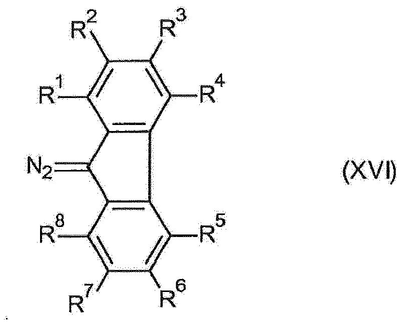 dans laquelle R¹ à R⁸ ont les significations indiquées pour la formule générale (IIa),
à une température dans la plage allant de +30 à +50 °C et à un rapport molaire entre le composé précurseur de catalyseur de formule générale (XVII) et le composé de formule générale (XVI) de 1:0,5 à 1:5, de préférence de 1:1,5 à 1:2,5, de manière particulièrement préférée de 1:2.

14. Utilisation des catalyseurs selon une ou plusieurs des revendications 1 à 12 dans des réactions de métathèse, notamment pour des métathèses par fermeture de cycle (RCM), des métathèses croisées (CM), des métathèses par ouverture de cycle (ROM), des polymérisations par métathèse par ouverture de cycle (ROMP), des polymérisations par métathèse de diènes cycliques (ADMET), des auto-métathèses, la mise en réaction d'alcènes avec des alcynes (réactions d'énynes), la polymérisation d'alcynes et l'oléfination de carbonyles.

15. Utilisation selon la revendication 14, dans laquelle un catalyseur selon une ou plusieurs des revendications 1 à 12 est utilisé pour réduire le poids moléculaire d'un caoutchouc de nitrile, par mise en contact d'un caoutchouc de nitrile avec le catalyseur.

16. Utilisation selon la revendication 15, dans laquelle la quantité du catalyseur par rapport au caoutchouc de nitrile utilisé est de 1 à 1 000 ppm de métal noble, de préférence de 2 à 500 ppm, notamment de 5 à 250 ppm, par rapport au caoutchouc de nitrile utilisé.

17. Utilisation selon la revendication 15 ou 16, dans laquelle un co- ou terpolymère est utilisé en tant que caoutchouc de nitrile, qui contient des unités de répétition d'au moins un diène conjugué, d'au moins un nitrile α,β-insaturé et éventuellement d'un ou de plusieurs autres monomères copolymérisables, de préférence l'acide fumarique, l'acide maléique, l'acide acrylique, l'acide méthacrylique, l'acrylate de méthyle, l'acrylate d'éthyle, l'acrylate de butyle, le méthacrylate de butyle, l'acrylate de 2-éthylhexyle, le méthacrylate de 2-éthylhexyle, l'acrylate d'octyle, le (méth)acrylate de méthoxyéthyle, le (méth)acrylate d'éthoxyéthyle et le (méth)acrylate de méthoxyéthyle.

18. Utilisation selon une ou plusieurs des revendications 15 à 17, dans laquelle une hydrogénation suit la réduction de poids moléculaire du caoutchouc de nitrile par métathèse.
